# EUROPÄISCHE PATENTSCHRIFT

(11) **EP 1 015 994 B1**
(45) Veröffentlichungstag und Bekanntmachung des Hinweises auf die Patenterteilung: **20.08.2008**
(21) Anmeldenummer: 98950065.7
(22) Anmeldetag: 21.09.1998
(51) Int. Cl.: G06F 15/02

(54) **ANZEIGEVORRICHTUNG MIT BILDSCHIRMABGEWANDTEM BEDIENELEMENT**
DISPLAY DEVICE COMPRISING AN OPERATING ELEMENT ON ITS REAR SIDE
DISPOSITIF D'AFFICHAGE COMPORTANT UN ELEMENT DE COMMANDE SUR SA FACE ARRIERE

(30) Priorität: 19.09.1997 DE 19741453
(43) Veröffentlichungstag der Anmeldung: 05.07.2000
(60) Teilanmeldung: 05022702.4
(73) Patentinhaber: Borgward, Rolus Glenn, 81470 München (DE)
(72) Erfinder: Borgward, Rolus Glenn, 81470 München (DE)
(74) Vertreter: Grünecker, Kinkeldey, Stockmair & Schwanhäusser Anwaltssozietät
(86) Internationale Anmeldenummer: PCT/EP1998/006008
(87) Internationale Veröffentlichungsnummer: WO 1999/015982

(56) Entgegenhaltungen:
- WO-A-97/22097
- DE-A- 19 546 786
- GB-A- 2 299 735
- PATENT ABSTRACTS OF JAPAN vol. 96, no. 3, 29. März 1996 & JP 07 295720 A (NTT DATA TSUSHIN KK), 10. November 1995
- PATENT ABSTRACTS OF JAPAN vol. 97, no. 3, 31. März 1997 & JP 08 314571 A (RICOH KK), 29. November 1996
- PATENT ABSTRACTS OF JAPAN Bd. 1996, Nr. 9, 30. September 1996 (1996-09-30) & JP 08 123760 A (MATSUSHITA ELECTRIC IND CO LTD), 17. Mai 1996 (1996-05-17)

## Beschreibung

Die vorliegende Erfindung betrifft ein digitales Buch, d.h. eine mobile Anzeigevorrichtung, insbesondere zur Wiedergabe von Buch-, Zeitungs-, und Zeitschrifteninformationen und anderen Dokumentationen bzw. Publikationen in elektronischer bzw. digitaler Form mittels Text-, Grafik-, Foto- und/oder Video- und Audioinformationen zur Bedienung durch Laienanwender.

Der Papierverbrauch und die damit verbundene Nachfrage an Rohstoffen wachsen Jahr für Jahr an. Die stets wachsende Zahl der Bevölkerung und der immer größer werdende Informationsbedarf, aber auch der selbstauferlegte konkurrenzbedingte Kommunikationszwang verursachen eine sich explosionsartig ausbreitende Informationsflut, welche in immer kürzeren Abständen einen immensen Verbrauch an Papier bedingt, somit nicht nur die Umwelt belastet, sondern auch in Bezug auf Transport-, Lagerhaltungs- und Recyclingkosten sowie in Bezug auf die Bereitstellungsgeschwindigkeit von Publikationen einen wirtschaftlichen Nachteil mit sich bringt. Dank moderner Informationstechnologien ist es zwar möglich geworden, einen großen Teil der Informationen über Computer zu produzieren, diese über beispielsweise Internet, Online-Dienste oder Datenbanken anzubieten oder in Form von CDs zu vermarkten; jedoch können diese nur über PCs, Laptops und Notebooks vom Verbraucher konsumiert werden, was voraussetzt, dass zumindest einer der vorgenannten Computer angeschafft, notwendige Applikationen installiert, und ihre Anwendung beherrscht werden muß, bevor eine erste Publikation gelesen werden kann.

Vorgenannte Gründe und die damit verbunden Investitionskosten, der notwendige Zeitaufwand und das aus Sicht eines technischen Laien erforderliche Spezialwissen zur Installation und Bedienung von Hard- und Software machen es einem großem Teil der Bevölkerung schwer, den Vorteil elektronischer Publikationen zu nutzen. Aber auch ältere oder behinderte Menschen finden oft keinen Zugang zu Computern, da ohne Grundkenntnisse die Bedienung und Handhabung für einen Laien nicht oder nur schwer möglich ist oder die Komplexität der Benutzerschnittstellen diese Menschen überfordert.

Zudem weisen Laptops und Notebooks durch ihre diversen Laufwerke und Vielzahl von Ein- und Ausgabeschnittstellen für bestimmte Benutzungsfälle große Volumina und Gewichte auf und sind mit einer Tastatur für den gesamten jeweils betreffenden Zeichensatz sowie mit einem einzigen Bildschirm oder Display ausgestattet. Es gibt jedoch Anwendungsfälle, in denen einerseits die relativ aufwendige und flächenverbrauchende Tastatur unnötig ist und andererseits die nur durch einen einzigen Bildschirm zur Verfügung stehende Anzeige- oder Anzeige-/Bearbeitungsfläche in bestimmten Benutzungsfällen zu klein ist.

Laptops und Notebooks sind durch ihre Bestimmung als Arbeitswerkzeug und die damit verbundenen konstruktionsbedingten bzw. baulichen Merkmale primär kein ergonomisches, d.h. handliches und reduziert zu bedienendes Informationsmittel zur Aufnahme z.B. von schöngeistiger Literatur oder zum Lesen von Berichten, Artikeln, Reportagen und Nachrichten aus Zeitschriften und Zeitungen oder zum Studieren von Publikationen in entspannter Haltung oder in Situationen, wo keine Auflagefläche vorhanden ist. Aufwand und Zeit zur Bedienung stehen oft in keiner Relation zu den häufig spontanen Anforderungen, die vielfach auch noch kurzfristig zu erledigen sind, z.B. das Nachschlagen von Informationen aus einem Lexikon, einem Telefonbuch oder einer Fernsehzeitschrift.

Aus der Druckschrift US 5,534,888 A1 ist ein elektronisches Buch bekannt, welches zwei in der Art eines Buches aufklappbare Anzeigenteile sowie einen diese beiden Anzeigenteile verbindendes Mittelteil aufweist.

Eine einfache ergonomische und kompakte elektronische Vorrichtung als tatsächlicher Buch-, Zeitschrift- oder Zeitungsersatz für einen universellen Einsatz in unterschiedlichen Lebenssituationen, welche für technische Laien unkompliziert und komfortabel zu halten und zu bedienen ist und die gleichzeitig wenig optische Irritationen zum störungsfreien Lesen und Manipulieren unterschiedlichster Publikationen aufweist, ist bislang nicht bekannt. Das aus der Druckschrift US 5,534,888 bekannte elektronische Buch erfordert bei dem Gebrauch durch den Benutzer vielfach umständliche und zeitraubende komplizierte Bedienungsoperationen, da eine Vielzahl von ergonomisch unzweckmäßig angeordneten Tasten zu betätigen ist, deren Funktionalität vorgegeben ist und die den für die Anzeige zur Verfügung stehenden Raum beschneiden. Bei einem aus der Druckschrift US 5,534,888 bekannten elektronischen Buch erfolgt die Bedienung unter Zuhilfenahme eines Hilfsdisplays auf der Außenseite der Buchdeckel (Anzeigeelemente), was dazu führt, dass der Benutzer das elektronische Buch zuklappen muß, um bestimme Einstellungen vornehmen zu können. Desweiteren sind die Tasten nur einzeln zu bedienen. Auf der Rückseite des Mittelteils ist eine Vielzahl von elektrischen Verbindern angeordnet, die hinter Schutzklappen verborgen sind und die gegebenenfalls vom Benutzer mit technischen Kenntnissen identifiziert und durch Hochklappen der Schutzabdeckungen zugänglich gemacht werden müssen. Wenn an die Steckverbinder elektrische Leitungen angeschlossen sind, kann das elektronische Buch aus dem Stand der Technik nicht mehr am Buchrücken nach der Art eines Buches gehalten oder auf eine Unterlage gelegt werden.

Aus dem Dokument WO 97/22097 A1 sind ein elektronisches Buch sowie ein Verfahren zum Anzeigen mindestens einer Lese-Metrik für ein elektronisches Buch bekannt. Das Dokument WO 97/22097 A1 zeigt insbesondere eine mobile Anzeigeeinrichtung mit einem Gehäuse, das eine flächige Anzeigeeinheit mit mindestens einem flachen Bildschirm aufweist, und mit mindestens einer Eingabeeinrichtung zum Auslösen zugeordneter Bedienfunktionen, wobei Lesestoff in der flächigen Anzeigeeinheit dargestellt wird, und wobei für mindestens eine auslösbare Bedienfunktion ein zugeordneter bedienfunktionsspezifischer Bedienmodus einstellbar ist. Die bekannte mobile Anzeigevorrichtung weist mindestens ein betätigbares Bedienelement auf der flächigen Anzeigeeinheit in oder neben dem Lesestoff auf, wobei durch Betätigung der Bedienelemente Blätterfunktionen zum Navigieren im dargestellten Buchinhalt, Bereitsstellungsfunktionen für Auswahlmenüs oder Selektionsfunktionen innerhalb bereitgestellter Auswahlmenüs ausgelöst werden.

Aus dem Dokument Patent Abstracts of Japan, Vol. 96, Nr. 3, 29.03.1996, & JP 07 295 720 A ist eine einteilige Eingabevorrichtung mit einem Anzeige-Display bekannt, die auf der Vorderseite eine Anzeigeeinrichtung und auf der Rückseite eine Zeichensatz-Schreibtastatur mit einer Vielzahl von einzelnen Zeichen zugeordneten Tasten aufweist, die als Dateneingabeeinrichtung im Rahmen einer Datenerfassung dient. Die rückseitige Zeichensatz-Schreibtastatur ist zur beidhändigen Bedienung ausgelegt und dient nicht zum Auslösen von Navigationsfunktionen.

Die JP 08 123 760 A zeigt ein tragbares elektronisches Gerät, das an der Vordeseite ein Display und an der Rückseite Eingabeknöpfe und einen Trackball aufweist.

Der Erfindung liegt daher die Aufgabe zugrunde, eine mobile Anzeigevorrichtung der Eingangs genannten Art zu schaffen, die gegenüber dem Stand der Technik trotz kompakter Bauweise zum einen eine wesentlich vergrößerte Anzeigefläche und zum anderen eine für den Computerlaien leicht verständliche, benutzerfreundliche und einfache Handhabungsmöglichkeit bietet, um ihn in die Lage zu versetzen, umfangreiche Literatur, z. B. wissenschaftliche Werke, Enzyklopädien oder auch schöngeistige Literatur lesen zu können, und um dem Benutzer somit auch gegenüber einem herkömmlichen voluminöseren und schwereren Buch den Vorteil zu bieten, beliebig viele Seiten über beispielsweise nur zwei digitale Buchseiten in handlicher Form zumindest lesen und/oder gegebenenfalls bearbeiten zu können. Dabei sind die Lese- und Sehgewohnheiten der konventionellen Buch-, Zeitschriften- und Zeitungsleser zu berücksichtigen, die die möglichst irritationsfreie Betrachtung der angezeigten Publikationen bzw. Dokumenteninformationen erwarten und die sich durch einen zu sehr an der Computertechnik orientierenden Eindruck abstoßen lassen, z.B. hinsichtlich bestimmter Formen von Bedienelementen oder aufgrund sonstiger Überforderung, wie es oft bei älteren Menschen oder technischen Laien vorkommt, die die Nutzung eines elektronischen bzw. digitalen Buches (einer mobilen digitalen Anzeigevorrichtung) ablehnen. Sicherzustellen ist dabei ein sicheres und ergonomisches Halten und Bedienen in unterschiedlichen Situationen, z.B. beim Gehen, beim Liegen oder wenn sonst keine Auflagefläche vorhanden ist, sowie eine einfache und verständliche Handhabung bei minimalen oder fehlenden Vorkenntnissen oder beispielsweise bei einer Behinderung. Dabei soll eine unkomplizierte und gleichbleibende Bedienung trotz unterschiedlicher Anwendungsmöglichkeiten und vielfältiger Aufgaben erzielt werden. Es wird bezweckt, eine schnelle und reduzierte Bedienung mit minimalen Haltungsänderungen beim Lesen zu ermöglichen.

Die der Erfindung zugrunde liegende Aufgabe wird gelöst durch den Gegenstand des unabhängigen Patentanspruchs 1 .

Vorteilhafte Weiterbildungen der Erfindung sind durch die in den Unteransprüchen 2 bis 18 angegebenen Merkmale gekennzeichnet.

Die digitale mobile Anzeigevorrichtung gemäß der vorliegenden Erfindung ist vorteilhaft, da sie eine reale Alternative zu einem herkömmlichen Buch darstellt, wobei in erster Linie die Seh- und Lesegewohnheiten des Benutzers vorausgesetzt werden und besondere technische (Computer-)Vorkenntnisse nicht erforderlich sind.

Durch die mobile Anzeigevorrichtung gemäß der Erfindung beziehungsweise ihren Weiterbildungen und Modifikationen wird zudem gegenüber dem bekannten Stand der Technik
a) die Lese- und/oder Bearbeitungsfläche durch die Bedienung mittels rückseitiger Bedienelemente vergrößert,
b) das Lesen von Seiten ohne störende Elemente, z.B. Menüleiste, lcons, Bedienelemente etc. wie bei einer herkömmlichen Buchseite ermöglicht, und
c) dieses Gerät ohne besondere Vorbereitungen in einer beliebige Situation und in beliebiger Körperstellung, z. B. im Falle einer Bettlägerigkeit des Benutzers, benutzbar.

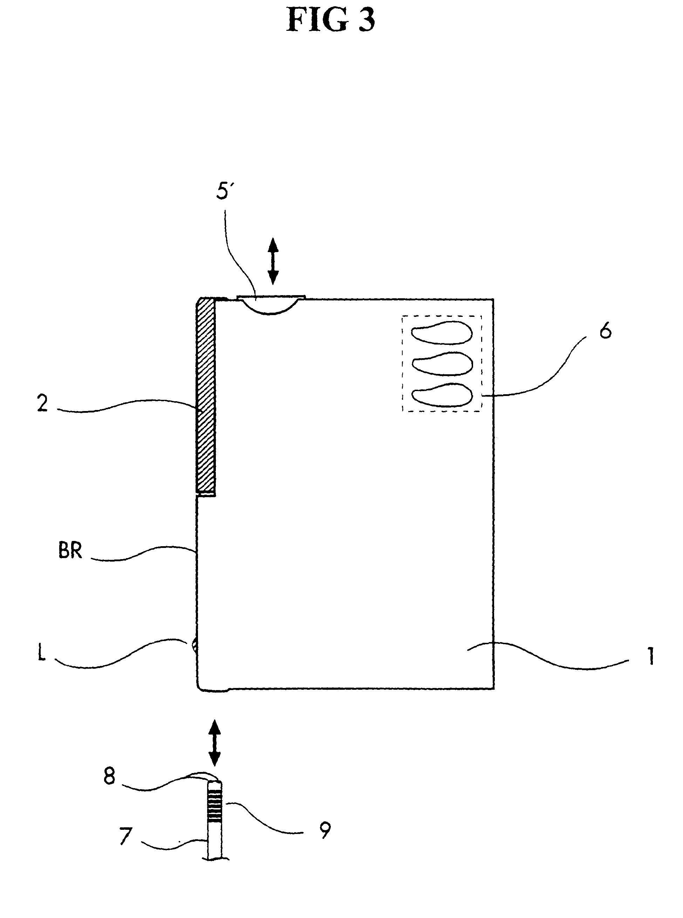

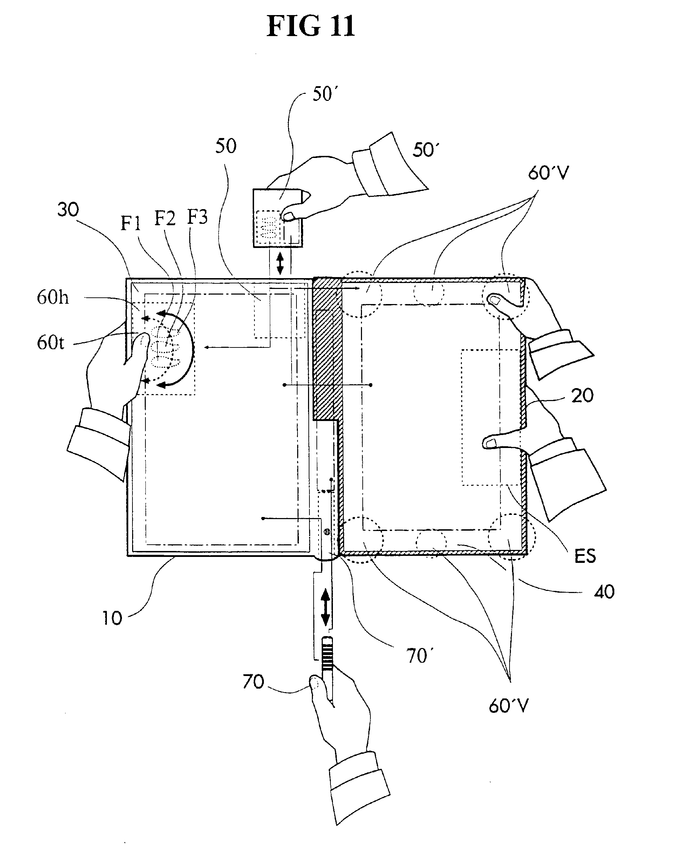

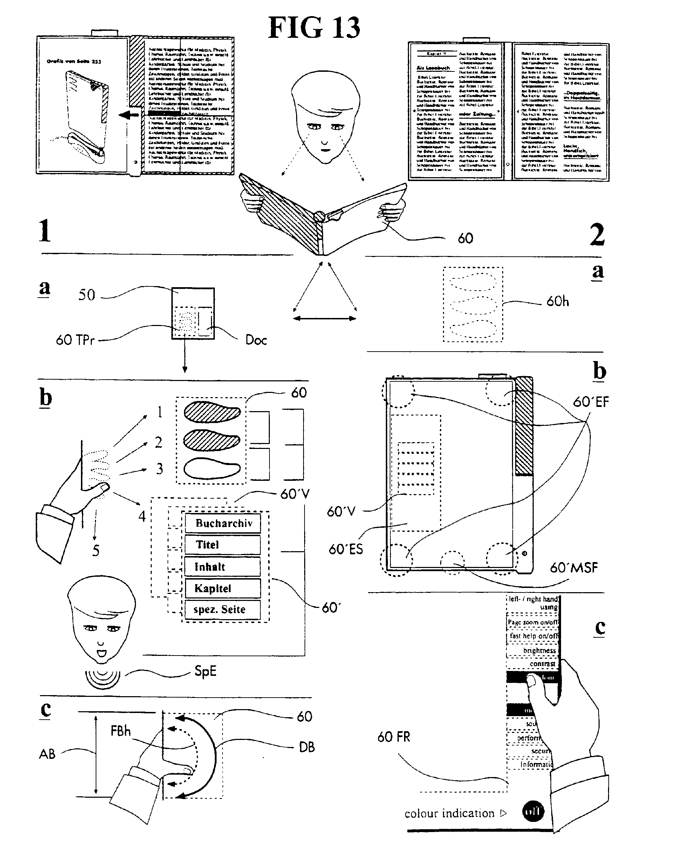

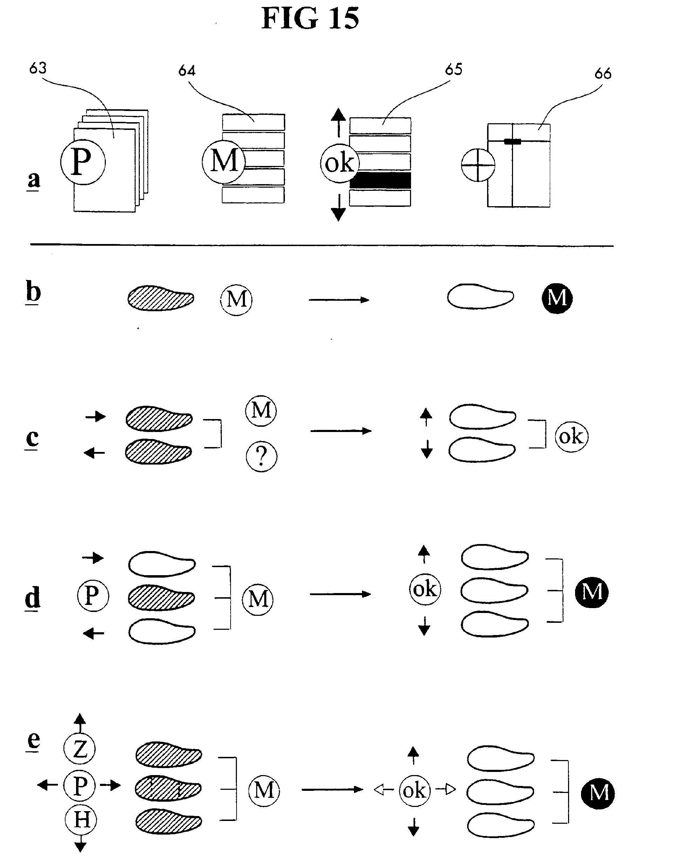

Im Greifhand-Aktionsbereich der haltenden Hand befindliche multifunktionale Eingabemittel (Fign. 11/60h), welche kombinierbar sind (Fign. 13-19) und softwaregesteuert programmiert bzw. umgeschaltet werden können (Fign. 13 bis 22) und vorzugsweise auf der der Anzeigenfläche abgewandten Seite als Tasten ausgebildet sind, die mit den Fingern der haltenden Hand bedient werden (Fign. 3, 4, 5, 6, 11, 13 bis 19), wobei Funktionen nur bei Bedarf angezeigt werden und am Rand behandelt werden ohne das Dokument zu stören (Fig. 15A, 16- 21) ermöglichen:
a) eine schnellere Ausführung von Bedienroutinen;
b) eine Minimierung von Bewegung bzw. eine Vermeidung von ständiger Haltungsänderung der ein Anzeigemittel haltenden Hand;
c) eine Reduzierung des technischen Eindrucks und/oder des Aufwandes bei größtmöglichen Nutzen bei geringstmöglichen Eingabeelementen;
d) eine bessere Verteilung der Aufgaben auf die einzelnen Finger;
e) eine Vergrößerung der vorderseitigen Anzeigenfläche;
f) eine Flexibilität durch die zusätzliche Möglichkeit der Kombination mit anderen Eingabemitteln, wie z.B. die Anzeigenfläche und/oder reale Bedienelemente, welche auch mit der anderen Hand bedient werden können, und/oder Spracheingabe; und
g) eine Erleichterung der Orientierung u.a. für Sehbehinderte und Blinde (vorausgesetzt ist selbstverständlich das Vorlesen der Buchinformationen über einen Audioausgang).

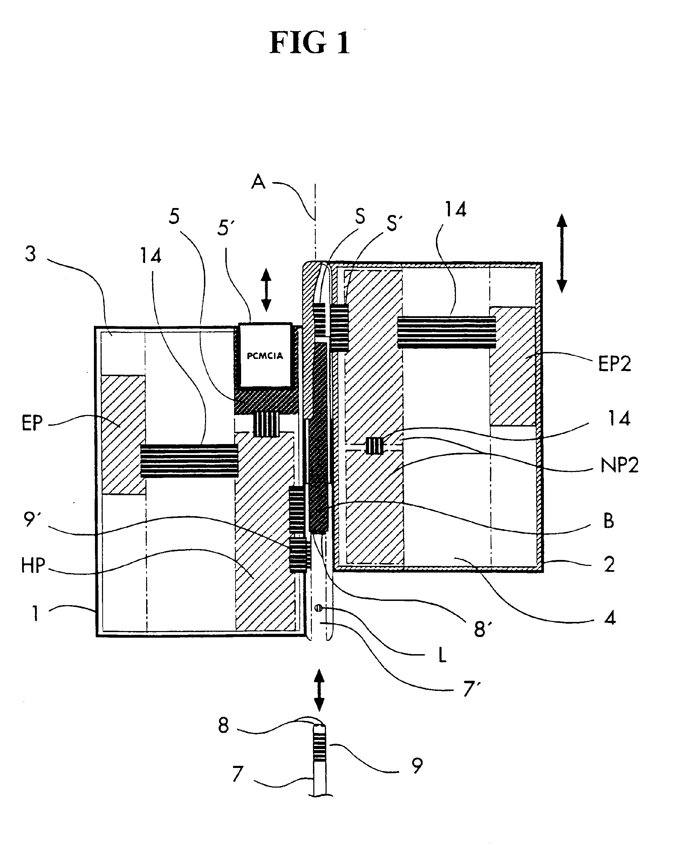

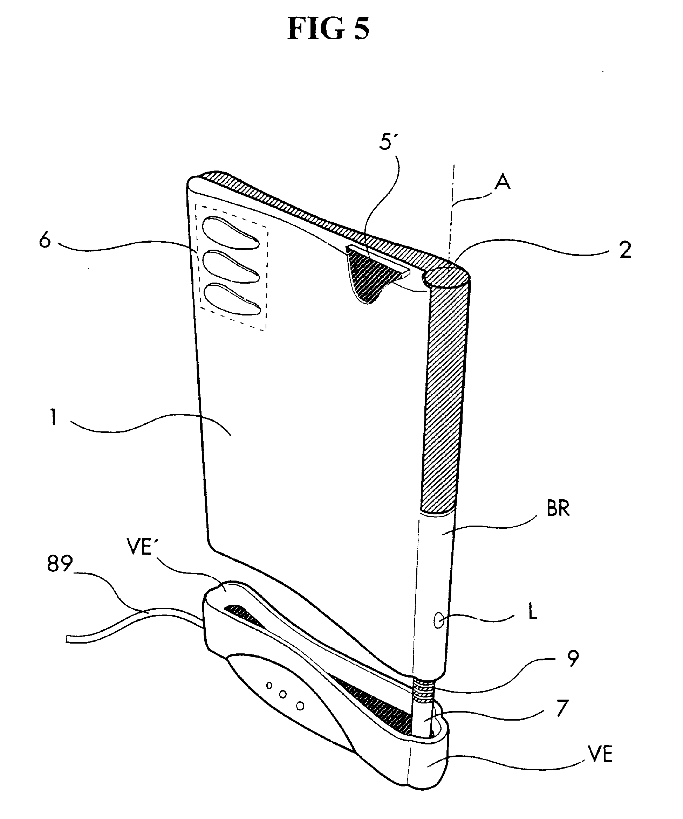

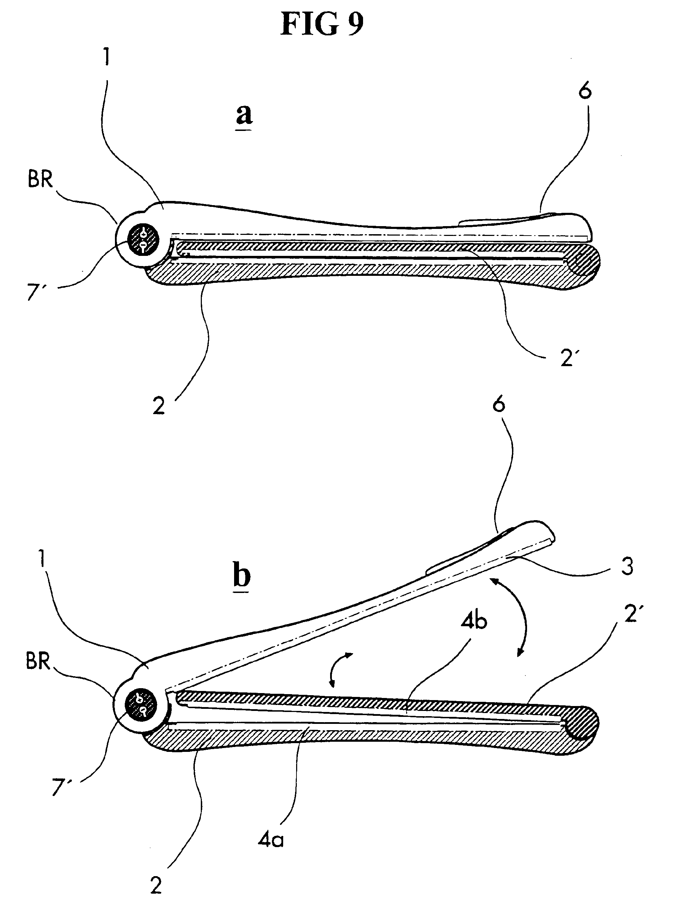

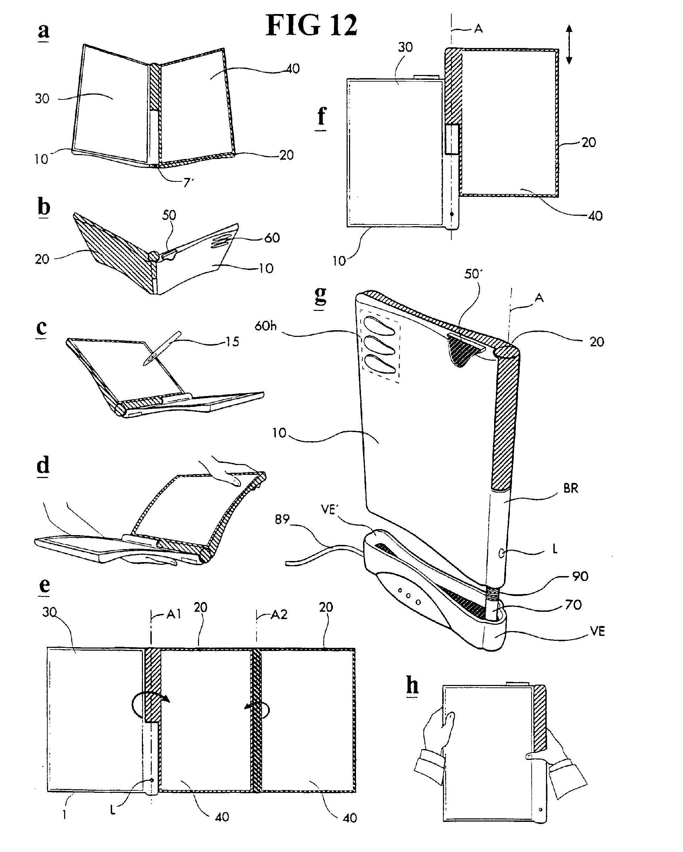

Auf der Unterseite einer mobilen digitalen Anzeigevorrichtung befindet sich eine Schnittstelle (Fig. 9), vorzugsweise im Drehgelenk einer zweiteiligen Anzeigeneinheit (Fig. 1-6, 11), welches der Haltegriff einer einteiligen Anzeigeneinheit ist (Fig. 12h) zur Kopplung mittels Kabelverbinder vorzugsweise mit Klinkenstecker, um unterschiedliche Vorrichtungen, Geräte und Einrichtungen mit dem Buch wirksam zu verbinden (Fig. 1, 2, 3, 5, 11, 25, 26) und/oder um als Halterung für die Buchstation zu dienen (Fig. 5) und Die digitale mobile Anzeigevorrichtung mittels Signalübertragung mit Dateninformationen und/oder Energie zu versorgen (Fig. 1); wodurch ermöglicht wird:
a) ein unkompliziertes Anschließen;
b) eine Vermeidung von Beschädigung bei unsachgemäßer Handhabung;
c) eine Reduzierung der Schnittstellen und damit verbunden günstigere Herstellungskosten;
d) ein kabel- und steckerfreier Buchrücken zum besseren Ablegen auf z.B. Tischfläche oder Schoß;
e) eine Nutzung sowohl für Kabelanschluß wie auch für den Haltestift der Versorgungsstation;
f) eine günstigere Symmetrie und Balance bei evtl. Zugentstehung durch angeschlossene Versorgungskabel;
g) eine geringere Irritation durch störende Kabel; und
h) eine Reduzierung des "technischen Eindruckes" beim Benutzer.

Ergonomisch ausgeformte Anzeigenrückseite und Flexibilität ermöglichen:
a) ein griffigeres, angenehmeres und sichereres Halten beim Bedienen und beim Transportieren;
b) eine kompaktere Bauweise bei sinnvoller und optisch vorteilhafter Unterbringung der erforderlichen Elektronik;
c) eine Sollbiegestelle zur Erleichterung der Biegsamkeit (Flexibilität);
d) das Versehen schutzrückseitig/seitlich angebrachter Bedienelemente;
e) eine Reduzierung des "technischen Eindruckes" beim Benutzer; und
f) eine geringere Verletzungsgefahr und leichter Transport.

Die erfindungsgemäße mobile Anzeigevorrichtung kann vorteilhaft als leicht mitzuführendes Nachschlagemittel, z. B. als inhaltlich umfangreiche Straßenkarte, Wanderkarte o. ä., benutzt werden. Außerdem kann bei Bedarf umfangreiche Literatur ohne mühseligen Transport einer Vielzahl von herkömmlichen Büchern auf Reisen mitgeführt werden. Die digitale mobile Anzeigevorrichtung eignet sich insbesondere auch als Nachschlagewerk an Orten, die keine große Bewegungsfreiheit bieten. Hier ist insbesondere das Cockpit eines großen Verkehrsflugzeuges zu erwähnen, in dem üblicherweise eine Vielzahl von Ordnern mit Prüf- und Bedienungsvorschriften mitzuführen sind. Besonders in Notsituationen ist es wichtig, betreffende Hinweise schnell ohne zeitaufwendiges Blättern auffinden zu können. Ein herkömmliches Notebook o. ä. ist wegen dessen komplizierter Handhabung und der Anfälligkeit seines Diskettenlaufwerks z. B. bei Turbulenzen nur bedingt geeignet. Dies gilt im übrigen in hohem Maße auch für Benutzungsfälle in Privatflugzeugen.

Ein weiterer Vorteil besteht darin, dass mindestens zwei Bildschirme im Buchseitenformat (Hochformat) als ganze Seiten gelesen werden können, wobei die zumindest zwei Bildschirme verschiedene Funktionen erfüllen können. So ist es beispielsweise möglich, einen Manuskripttext ganzseitig zu lesen und sich gleichzeitig auf dem Nebenbildschirm Textpassagen auszugsweise anzeigen zu lassen, die vorher auf der Textseite markiert worden sind, oder es lassen sich andere Seiten des betreffenden (z. B. wissenschaftlichen) Buchtextes zum Beispiel mit auf der Textseite erwähnten Illustrationen darstellen, ohne die aktuelle Buchseite damit zu überdecken oder wegzublenden. Außerdem lassen sich Querverweise, Nachschlagehinweise usw. durch Markieren des Quellenhinweises, beispielsweise durch Antippen mittels des Bildschirmstiftes, anzeigen, ohne "blättern" zu müssen.

Durch die Möglichkeit des Trennens der Bildschirme der mobilen digitalen Anzeigevorrichtung läßt sich ausgehend von einer Grundausführung desselben (die nur zum Lesen vorgesehen ist) der Nebenbildschirm entsprechend dem Anforderungsprofil und dem Stand der Technik an die Bedürfnisse des Benutzers anpassen und somit das Leistungsspektrum der digitalen mobilen Anzeigevorrichtung erweitern. Beispielsweise kann der Nebenbildschirm drucksensitiv ausgeführt sein, wodurch ein handschriftliches Beschreiben einer Bildschirmseite mittels des Bildschirmstiftes ermöglicht wird, während der geschriebene Text quasi simultan in Druckbuchstaben und ggf. mit Hilfe einer Übersetzungsfunktion der geladenen Software in einer anderen Sprache auf dem Hauptbildschirm dargestellt werden kann. Dies ermöglicht beispielsweise ein schnelleres und bequemeres Erstellen und Bearbeiten von Geschäftsbriefen.

Im Folgenden werden Ausführungsbeispiele der Erfindung anhand mehrerer Figuren im einzelnen beschrieben.
- **Fig. 1**: zeigt eine schematische Draufsicht eines anzeigenteilekoppelbaren Ausführungsbeispiels mit zwei Anzeigenteilen der erfindungsgemäßen mobilen Anzeigevorrichtung im aufgeklappten Zustand des Buchgehäuses mit schematisch angedeuteten Einbauten und Zusatzelementen für die digitale mobile Anzeigevorrichtung einschließlich der Trennungs- und Verbindungsmöglichkeiten der wesentlichen Teile derselben.

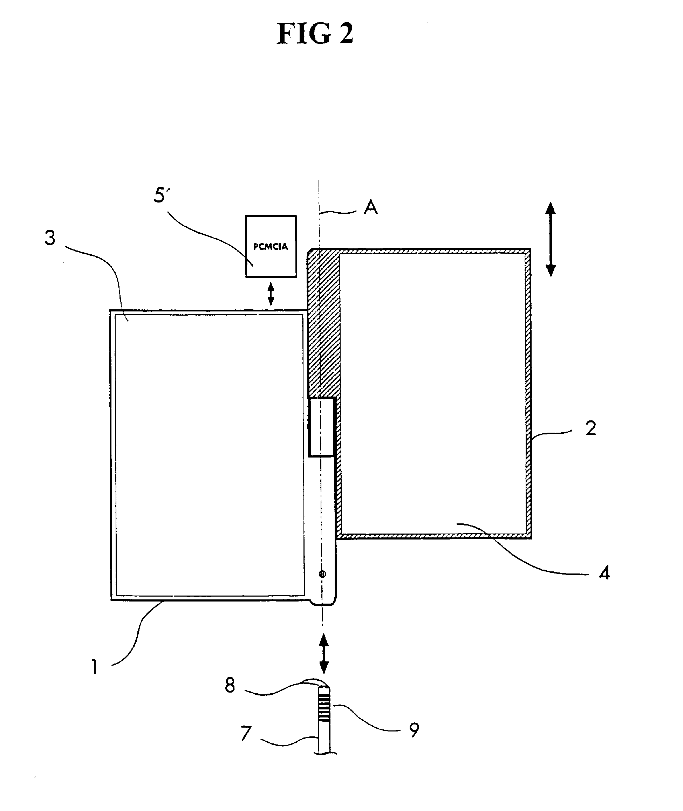

- **Fig. 2**: zeigt eine vereinfachte schematische Draufsicht des anzeigenteilekoppelbaren Ausführungsbeispiels mit zwei Anzeigenteilen der erfindungsgemäßen mobilen Anzeigevorrichtung im aufgeklappten Zustand des Buchgehäuses und Zusatzelemente desselben, ähnlich der in Fig. 1 gezeigten Darstellung.
- **Fig. 3**: zeigt eine schematische Seitenansicht eines fest verbundenen und/oder des Haupt-Teils des anzeigenteilekoppelbaren Ausführungsbeispiels mit zwei Anzeigenteilen der mobilen Anzeigevorrichtung und vorzugsweise aneinanderliegende Kombinationstastenelemente im Greifrandbereich zur Bedienung derselben.

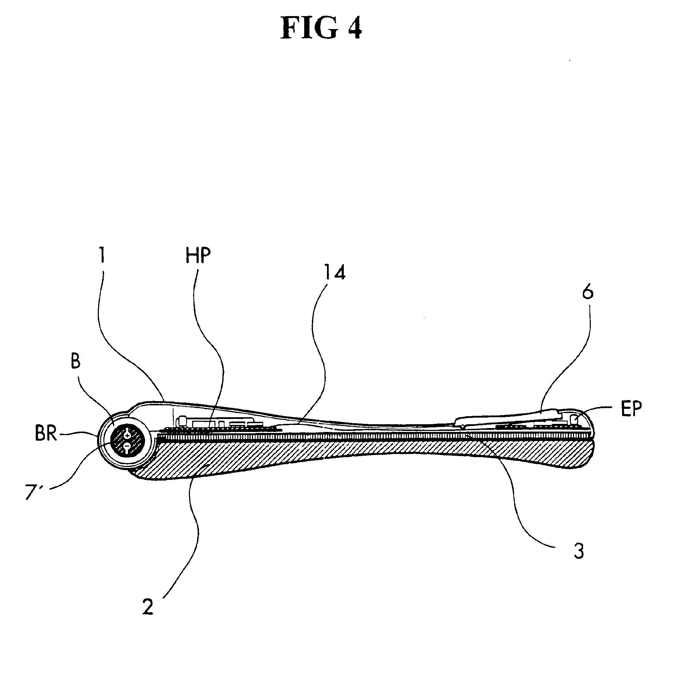

- **Fig. 4**: zeigt teilweise im Schnitt eine Bodenansicht des fest verbundenen und/oder des anzeigenteilekoppelbaren Ausführungsbeispiels mit zwei Anzeigenteilen der geschlossenen erfindungsgemäßen mobilen digitalen Anzeigevorrichtung zur Benutzung der vorzugsweise aneinanderliegenden Kombinationstastenelemente im Greifrandbereich zur Bedienung z.B. durch einen Linkshänder u./o. Rechtshänder wenn z.B. eine beschreibbare Anzeigenfläche auf der rechten Seite der digitalen mobilen Anzeigevorrichtung angeordnet ist.
- **Fig. 5**: zeigt eine perspektivische Ansicht des fest verbundenen und/oder des anzeigenteilekoppelbaren Ausführungsbeispiels mit zwei Anzeigenteilen der erfindungsgemäßen mobilen digitalen Anzeigevorrichtung in geschlossenem Zustand zur Benutzung der vorzugsweise aneinanderliegenden Kombinationstastenelemente im Greifrandbereich zur Bedienung und eine perspektivische Ansicht einer Versorgungseinheit.

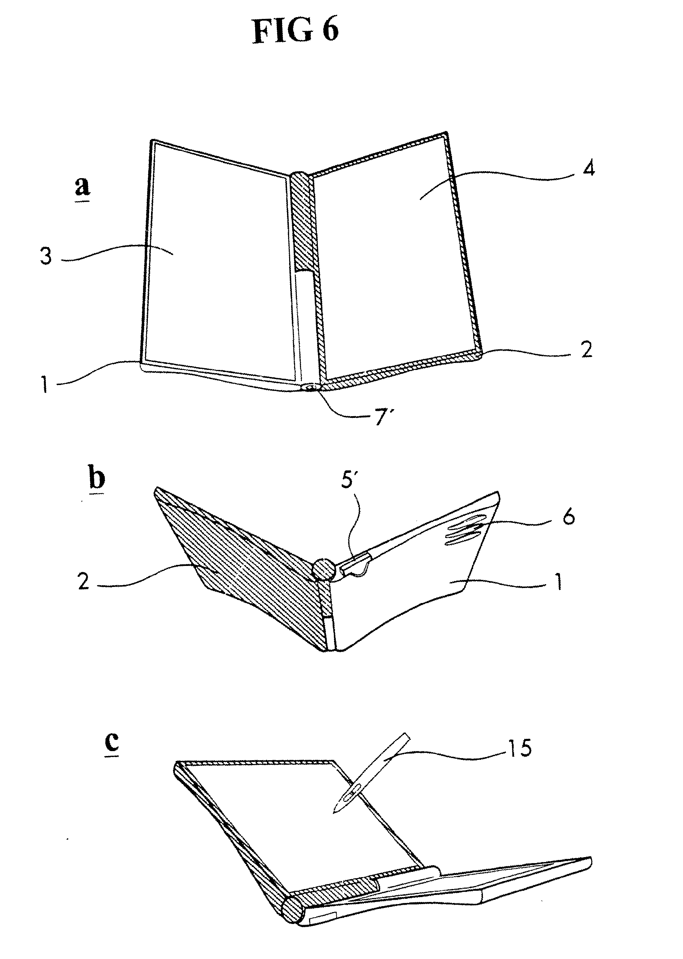

- **Fig. 6a, Fig. 6b u. Fig. 6c**: zeigen verschiedene perspektivische Ansichten im "aufgeschlagenen" Zustand eines festverbundenen und/oder eines anzeigenteilekoppelbaren Ausführungsbeispiels der erfindungsgemäßen mobilen digitalen Anzeigevorrichtung mit zwei Anzeigenteilen zum Lesen und/oder Beschreiben einer beschreibbaren Anzeigenfläche.

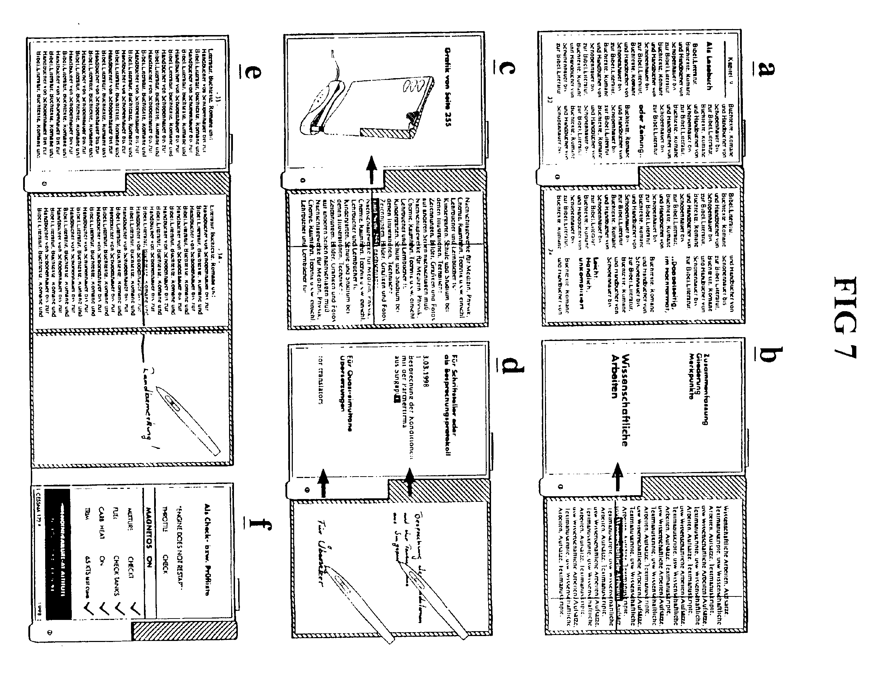

- **Fig. 7a, Fig. 7b, Fig. 7c, Fig. 7d, Fig. 7e u. Fig. 7f**: zeigen verschiedene Darstellungen, jedoch nicht darauf beschränkt, des fest verbundenen und/oder des anzeigenteilekoppelbaren Ausführungsbeispiels mit einem, zwei und drei Anzeigenteilen der erfindungsgemäßen mobilen digitalen Anzeigevorrichtung in verschiedenen Benutzungsfällen, wobei aus den Darstellungen verschiedene Vorteile des digitalen Buches ersichtlich sind.

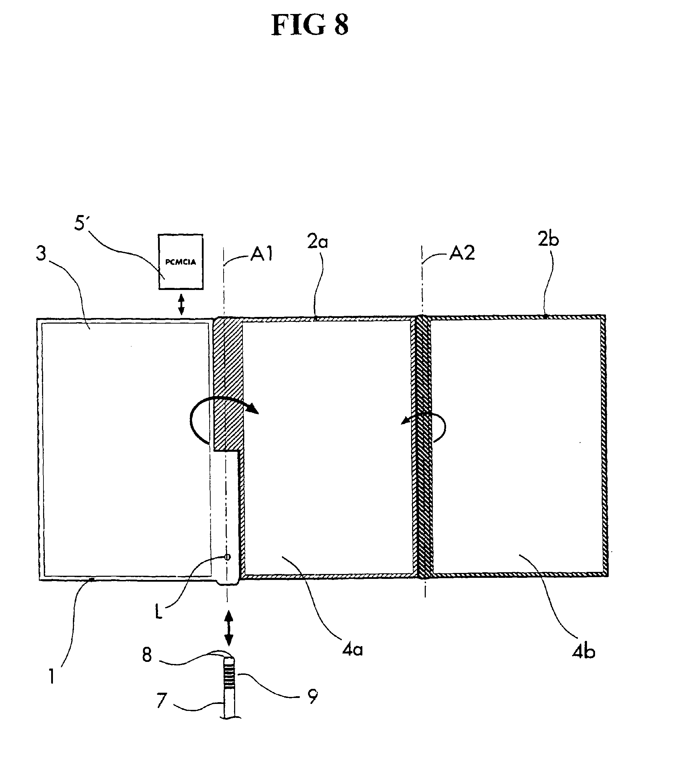

- **Fig. 8**: zeigt die Darstellung einer Aufbaumöglichkeit des Nebenteils eines anzeigenteilekoppelbaren Ausführungsbeispiels der erfindungsgemäßen mobilen digitalen Anzeigevorrichtung in Form eines Doppelbildschirms ähnlich einem Faltplan oder einem Terminplaner im "aufgeschlagenen" Zustand der mobilen digitalen Anzeigevorrichtung für einen Benutzungsfall mit drei Bildschirmen.
- **Fig.9a u. Fig. 9b**: zeigen Darstellungen der selben Ausführungsform, wie sie in **Fig. 8** gezeigt ist, im zusammengefalteten oder "zugeschlagenen" Zustand der mobilen Anzeigevorrichtung.

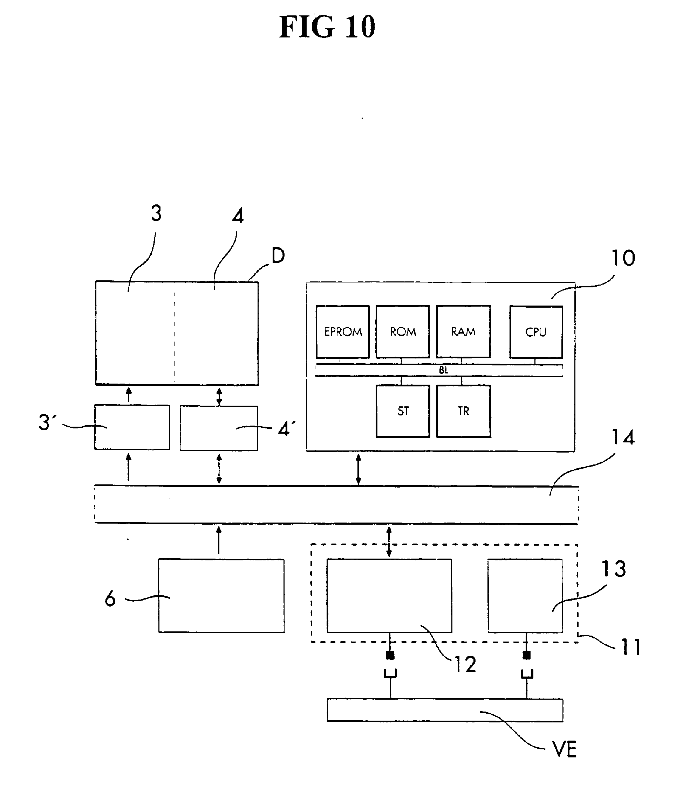

- **Fig. 10**: zeigt ein beispielhaftes jedoch nicht auf dieses beschränktes Blockschaltbild des anzeigenteilekoppelbaren Ausführungsbeispiels der erfindungsgemäßen mobilen digitalen Anzeigevorrichtung einer Konfiguration von Einheiten und Bausteinen zum Betrieb der digitalen mobilen Anzeigevorrichtung.
- **Fig. 11**: zeigt die Darstellung des fest verbundenen und/oder anzeigenteilekoppelbaren Ausführungsbeispiels mit zwei Anzeigenteilen der erfindungsgemäßen mobilen Anzeigevorrichtung, jedoch nicht darauf beschränkt, und die der Erfindung zu Grunde liegenden optimierten Benutzerschnittstellen zur einfachen Bedienung durch einen Laienanwender und zur Reduzierung von technischen Informationen.
- **Fig. 12**: zeigt die Darstellung unterschiedlicher Erscheinungsformen der erfindungsgemäßen mobilen digitalen Anzeigevorrichtung, jedoch nicht darauf beschränkt, als ein- oder mehrteilige, festverbundene oder anzeigenteilekoppelbare Ausführung.
- **Fig. 13**: zeigt die der erfindungsgemäßen mobilen digitalen Anzeigevorrichtung zu Grunde liegenden Teilaspekte zur Optimierung, d.h. zur Vereinfachung der Bedienung bei gleichzeitiger Reduzierung von irritierenden Informationen und/oder technischen Ausbildungen

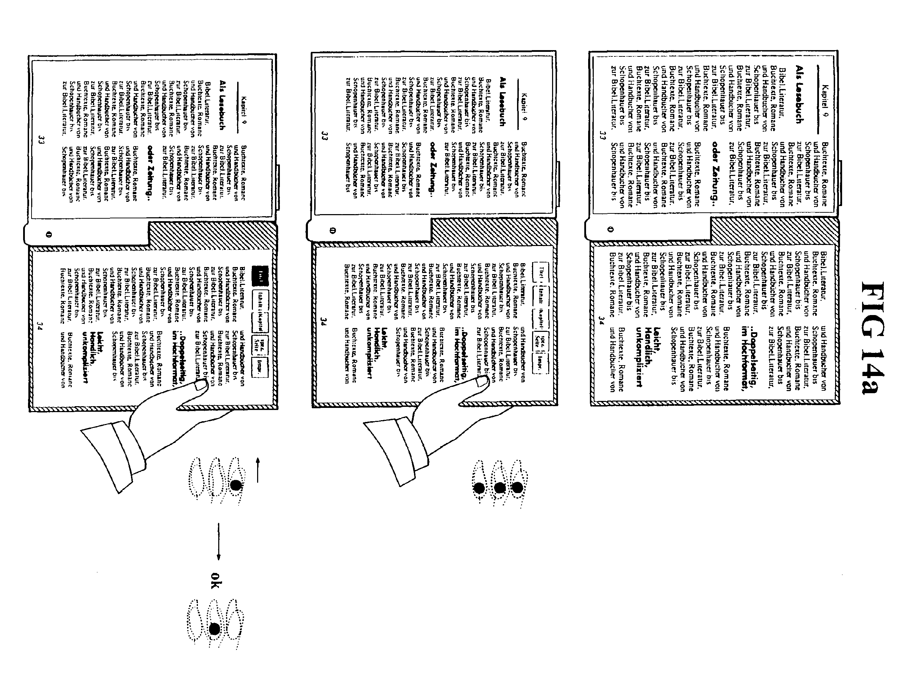

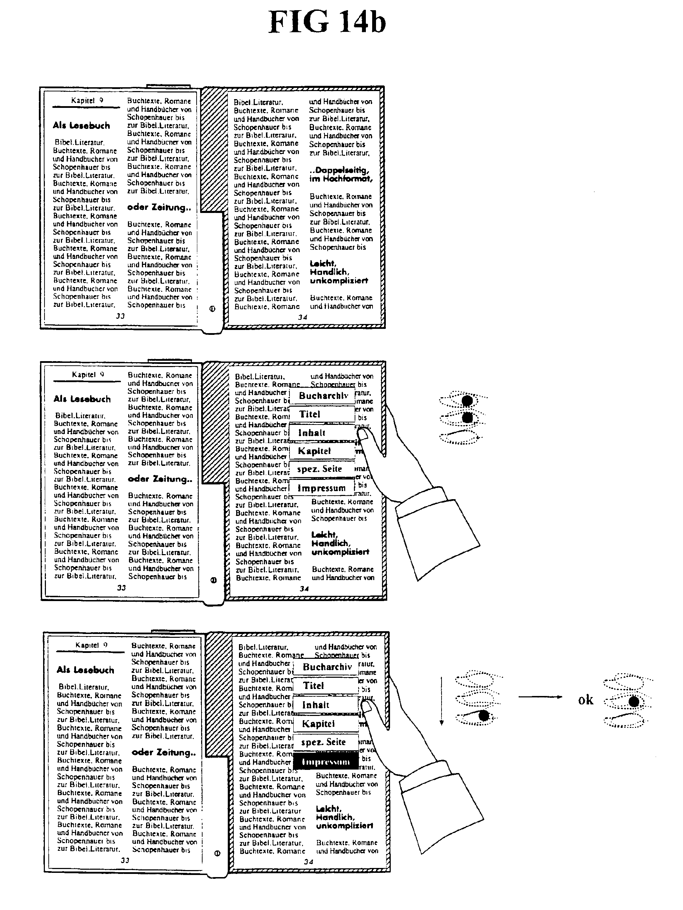

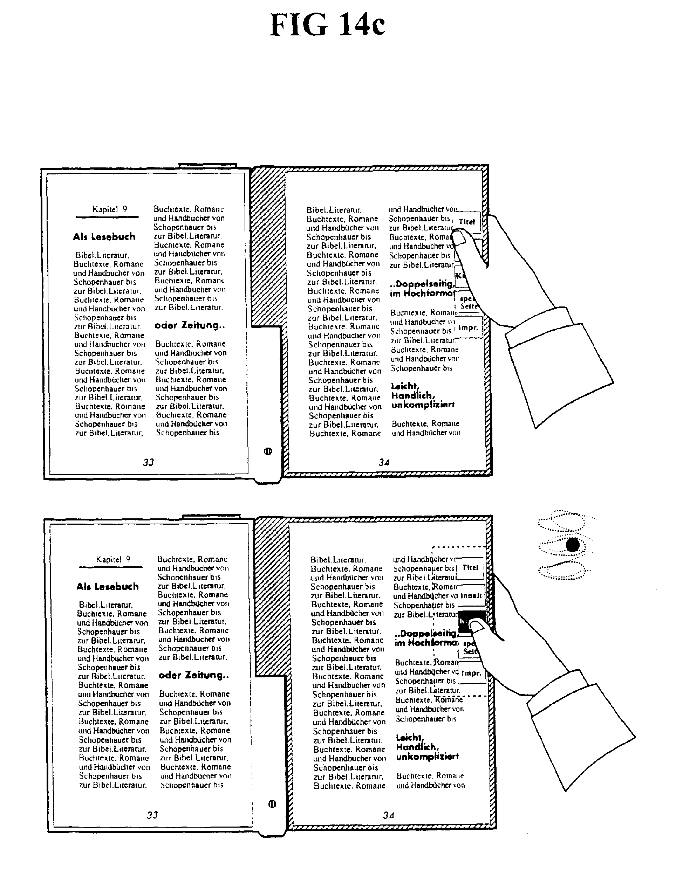

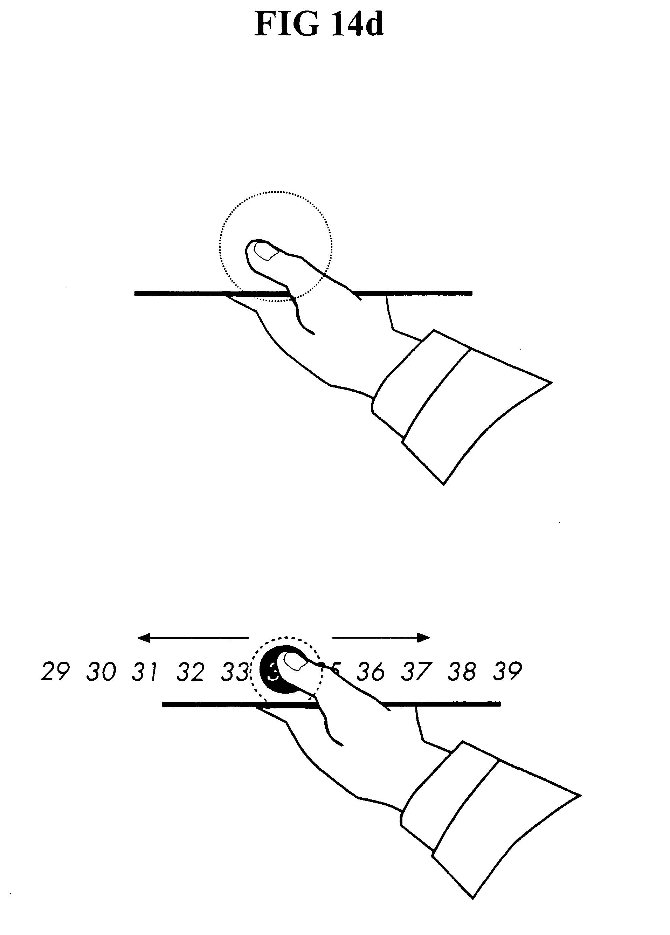

- **Fig. 14**: zeigt am Beispiel einer aufgeschlagenen, zweiteiligen erfindungsgemäßen mobilen digitalen Anzeigevorrichtung, jedoch nicht darauf beschränkt, eine Bereitstellung von Bedieninformationen und deren Weiterbedienung mittels der Anzeigenfläche abgewandter Bedienelemente und/oder mittels der Eingabe über eine sensitive Eingabefläche, und die Bereitstellung einer ersten Funktionsinformation sowie Weiterbedienung über die sensitive Eingabefläche.
- **Fig. 15**: zeigt Funktionsmöglichkeiten einer Minimalkonfiguration von Bedienelementen der erfindungsgemäßen mobilen digitalen Anzeigevorrichtung, mit einer ersten Funktion zur Ausführung einer ersten Aufgabe, am Beispiel des Bereitstellens einer Auswahlinformation auf der Anzeigefläche und der nach der ersten Bedienung folgenden selbsttätigen und softwaregesteuerten Umprogrammierung der Bedienelemente zur Erfüllung einer zweiten Aufgabe, z.B. dem Selektieren und/oder Aktivieren einer ausgewählten Funktion oder dem Ausschalten der Bereitstellung.

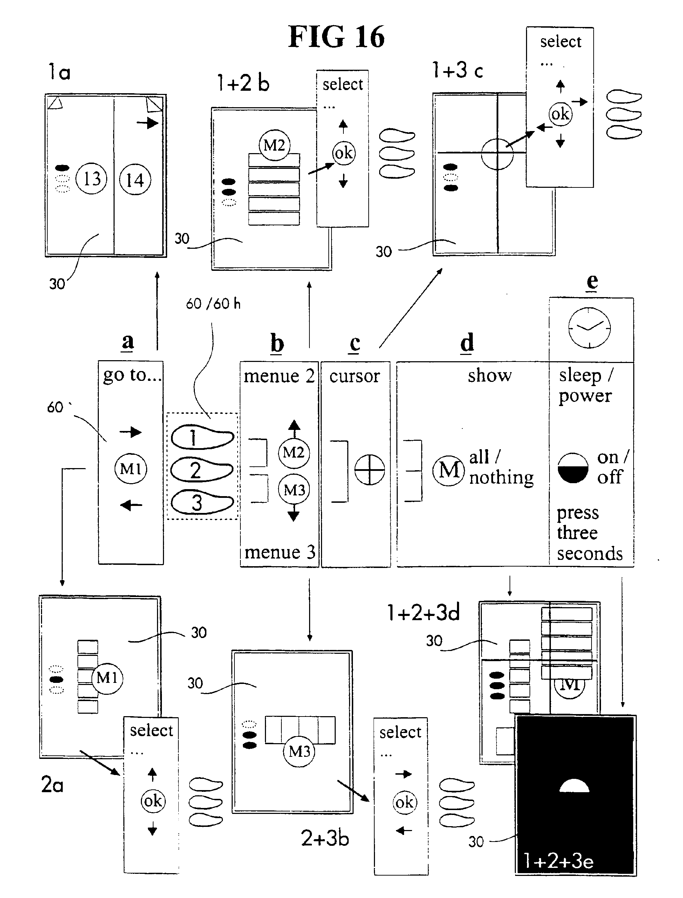

- **Fig. 16**: zeigt die generelle Kombinationsmöglichkeit eines Eingabefeldes der erfindungsgemäßen mobilen digitalen Anzeigevorrichtung, am Beispiel von drei realen Bedienelementen und deren Programmierung hinsichtlich einer ersten Funktion und durch Kombinationsbedienung möglichen weiteren ersten Funktionen, sowie der selbsttätigen softwaregesteuerten Umprogrammierung der Bedienelemente durch einen ersten Bedienschritt, zur Erfüllung einer anderen Aufgabe in einem zweiten Bedienungsschritt.

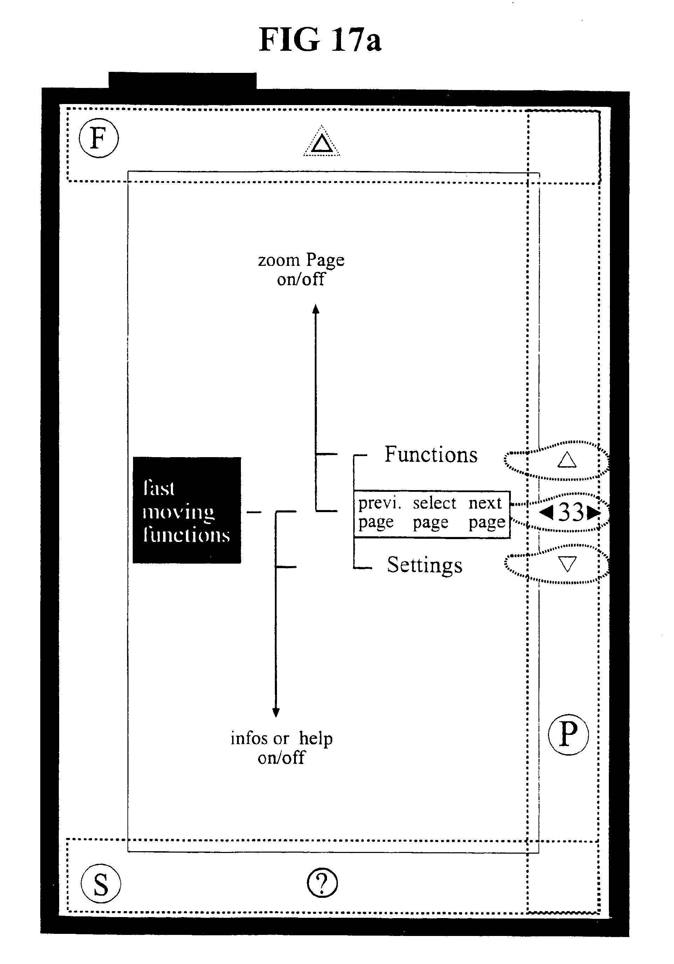

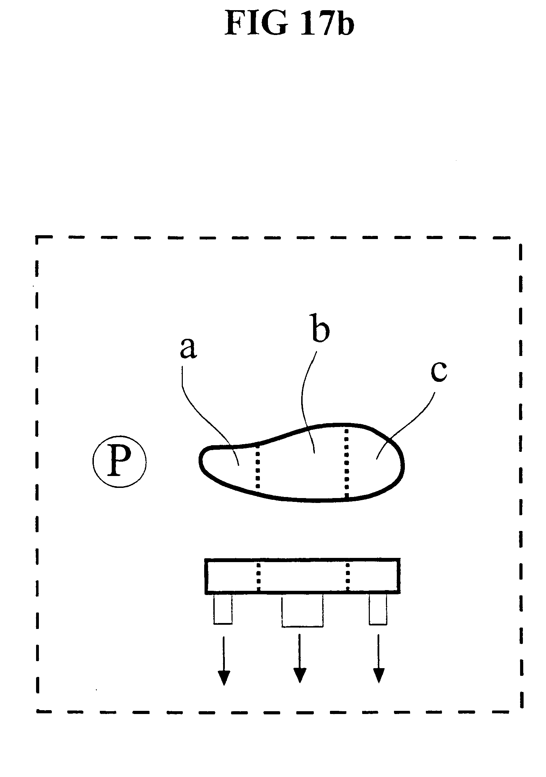

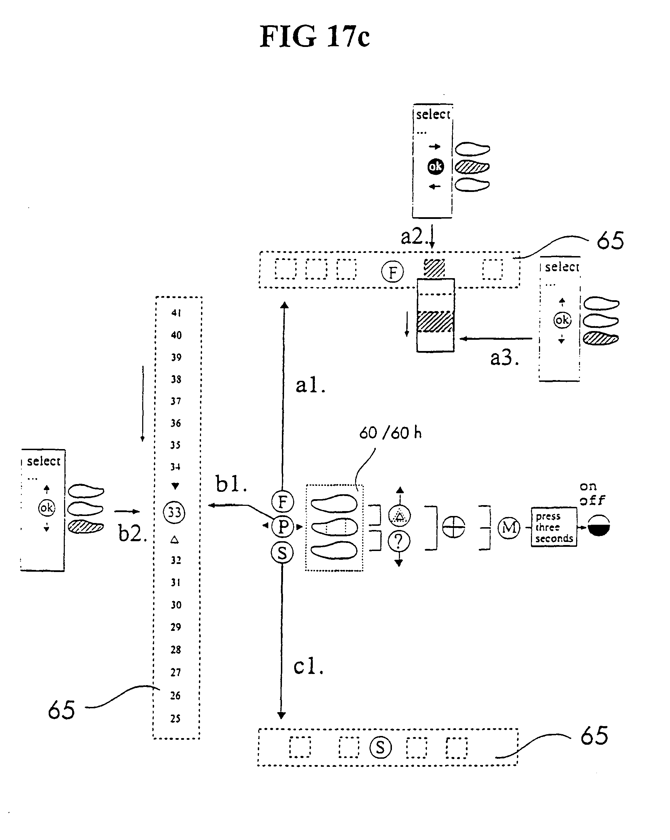

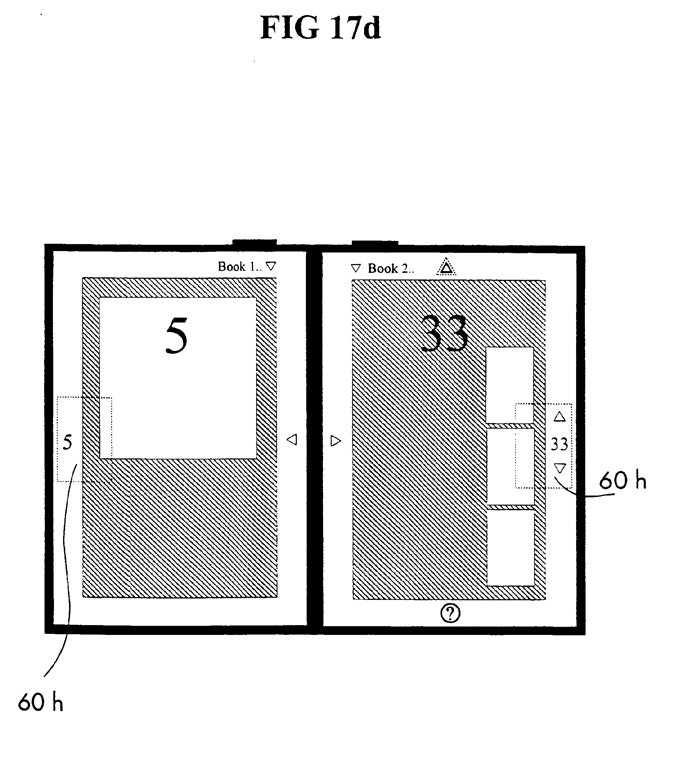

- **Fig. 17**: zeigt am Beispiel eines ein-/ und zweiteiligen Anzeigenteils der erfindungsgemäßen mobilen digitalen Anzeigevorrichtung die Programmierung der vorzugsweise rückseitig angeordneten drei Bedienelemente für ein digitales Buch, bei welcher eine Bedienung nur über reale Bedienelemente bewerkstelligt wird.

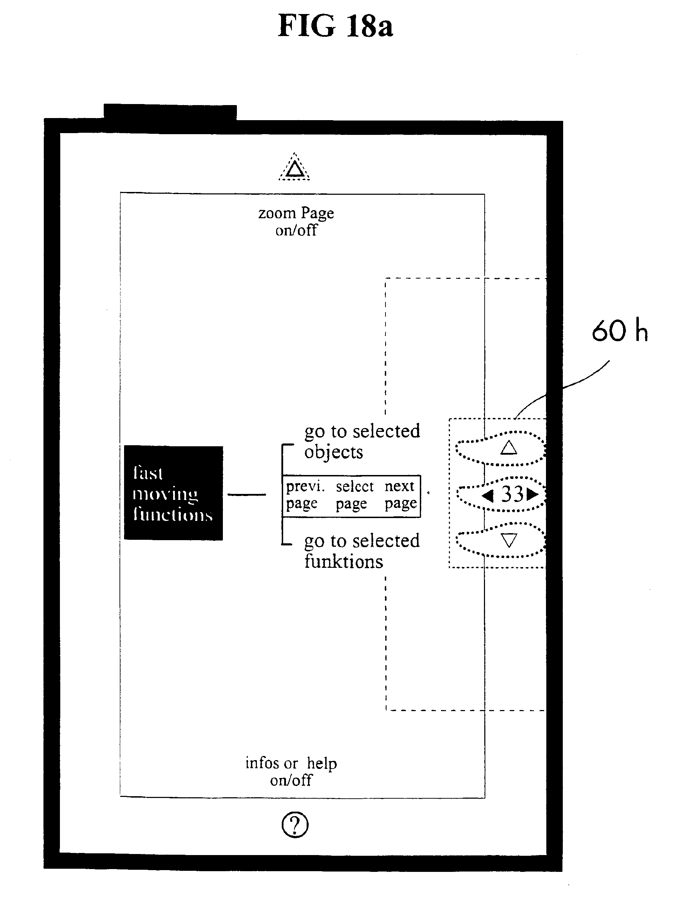

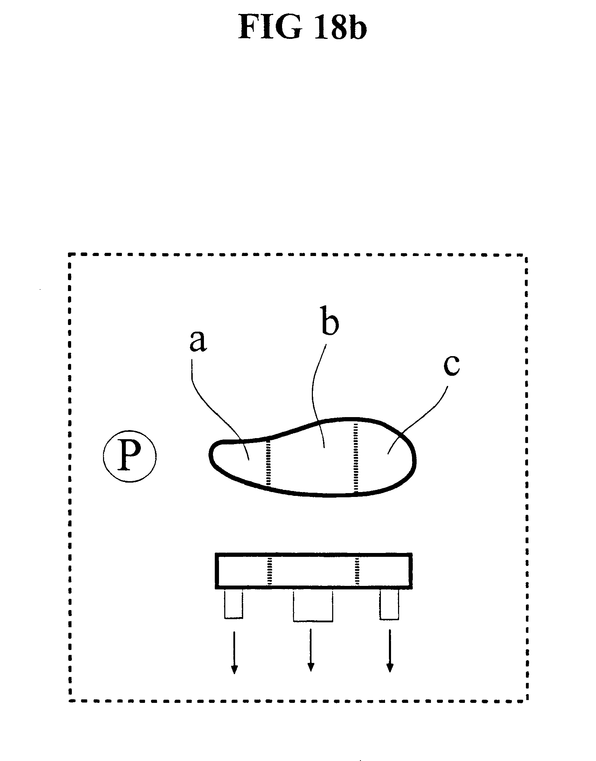

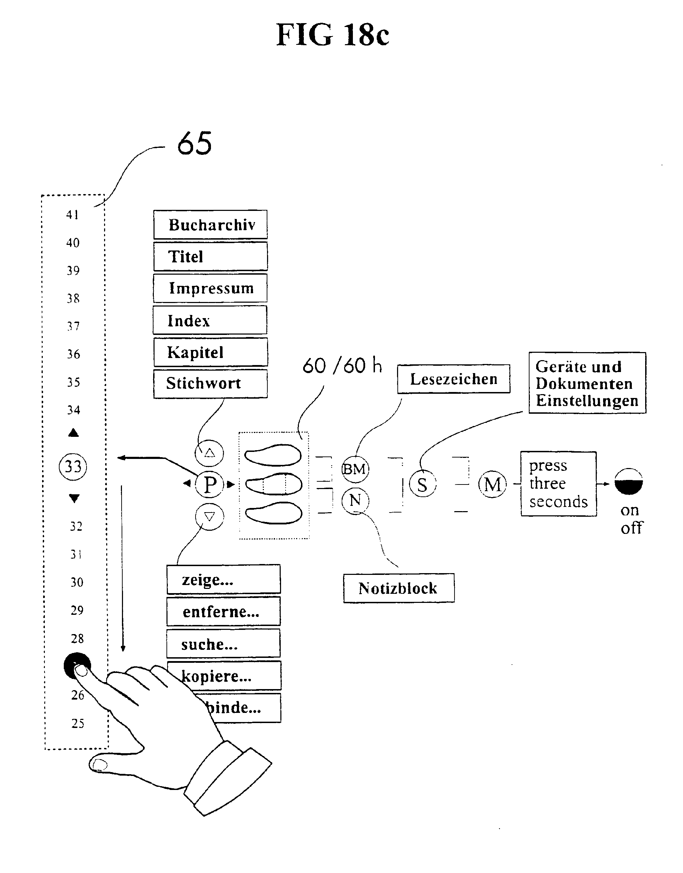

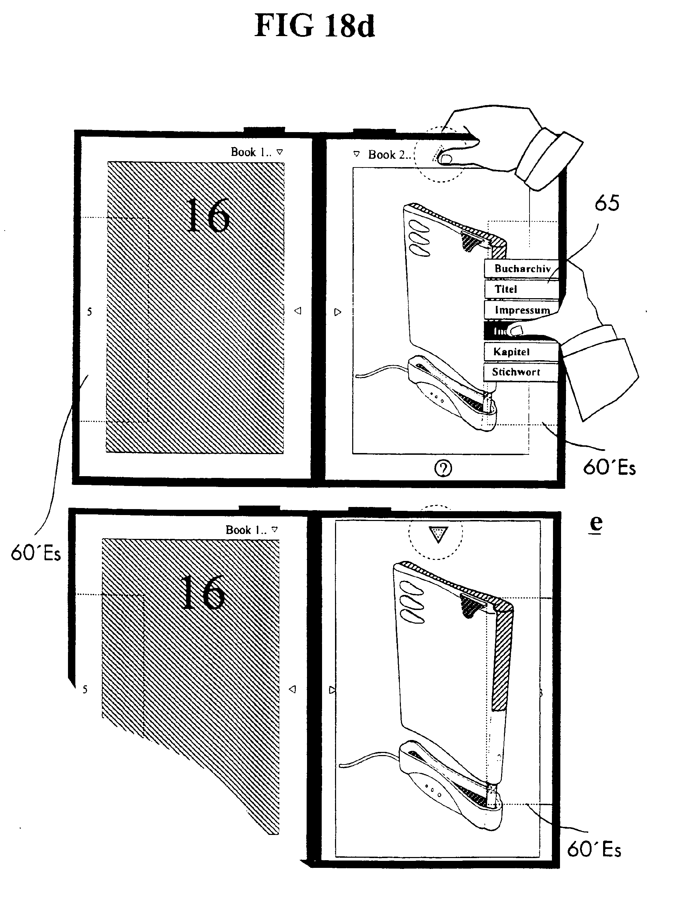

- **Fig. 18**: zeigt am Beispiel eines ein-/ und zweiteiligen Anzeigenteils mit einer zusätzlichen Möglichkeit der Eingabe über die Anzeigenfläche (Touchscreen) die Programmierung der vorzugsweise rückseitig angeordneten, drei Bedienelemente für ein digitales Buch, bei welchem die realen Bedienelemente in einer ersten Funktion die Bereitstellung von Bedieninformationen auf der Anzeigenfläche realisieren, zur anschließenden Weiterbearbeitungs- bzw. Bedienungsmöglichkeit über eine sensitive Anzeigenfläche.

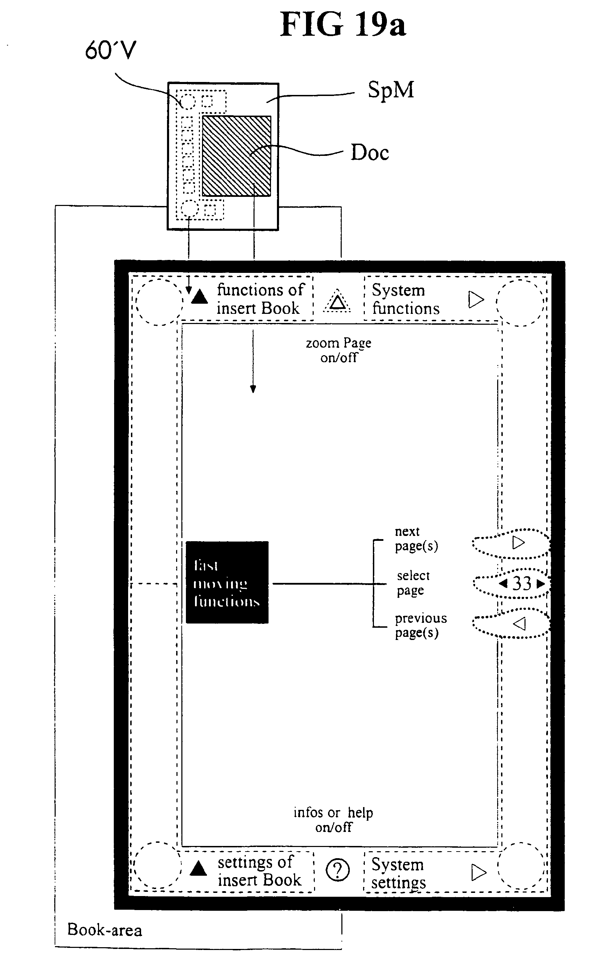

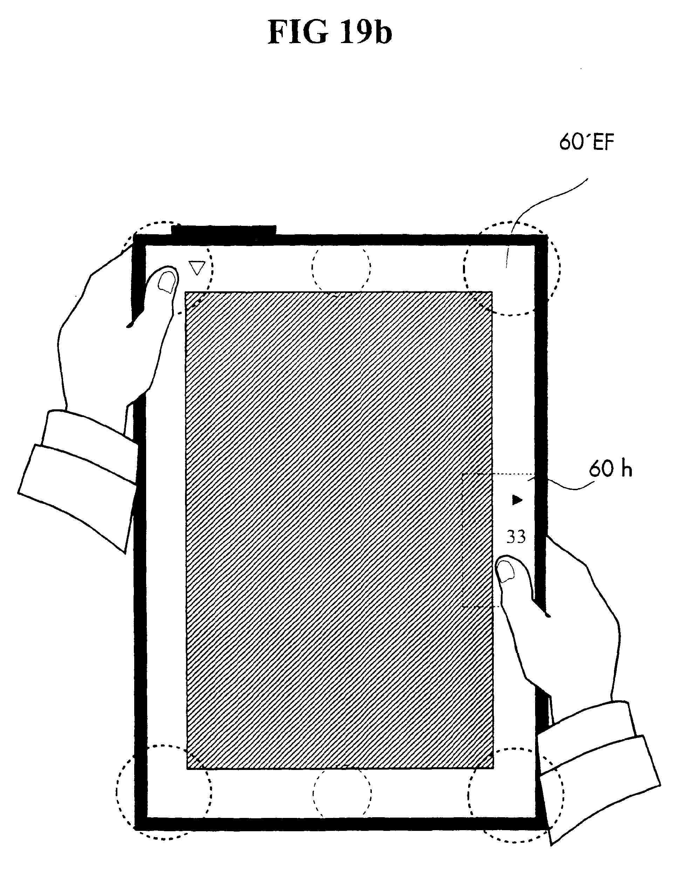

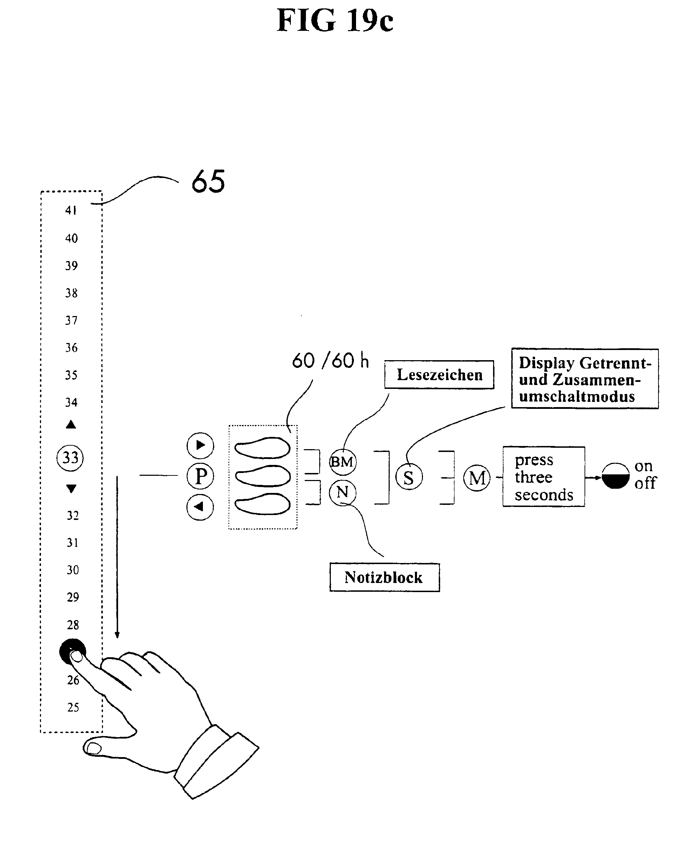

- **Fig. 19**: zeigt am Beispiel eines ein- / und zweiteiligen Anzeigenteils die Programmierung der vorzugsweise rückseitig angeordneten drei Bedienelemente für ein digitales Buch als Schnellfunktionsbedienelemente für häufige Routineoperationen am Beispiel einer ersten Funktion einfach zu betätigender Bedienelemente, beispielsweise zum Bewegen der Seiten innerhalb eines Buchdokumentes, und die Bearbeitung von nicht so häufig gebrauchten Funktionen über die Anzeigenfläche, wobei diese über das Berühren einer Stelle in der Anzeigenfläche bereitgestellt werden, und beispielsweise durch die Initialisierung eines gekoppelten Buchdokumentes programmiert sind.

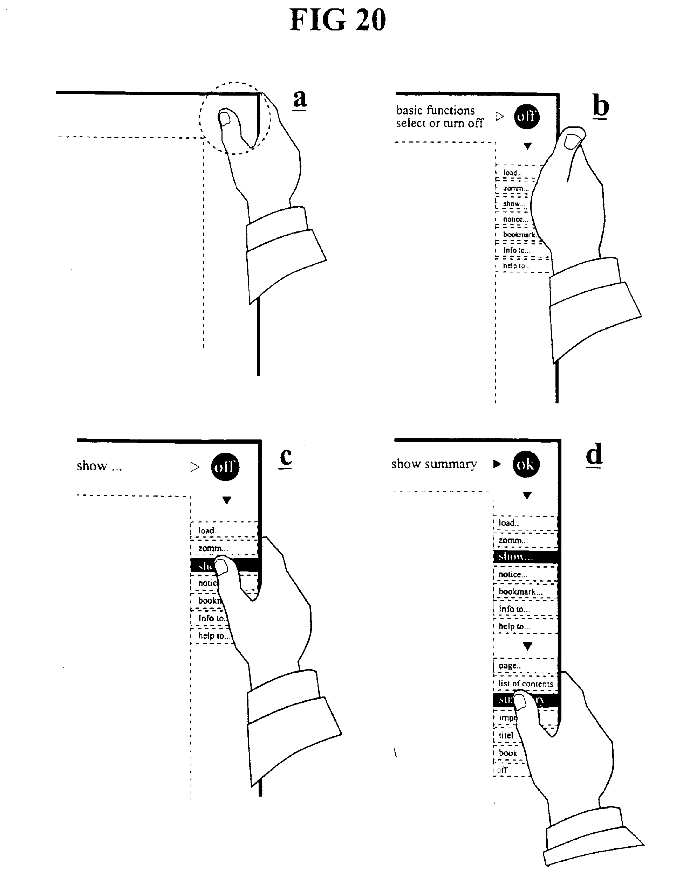

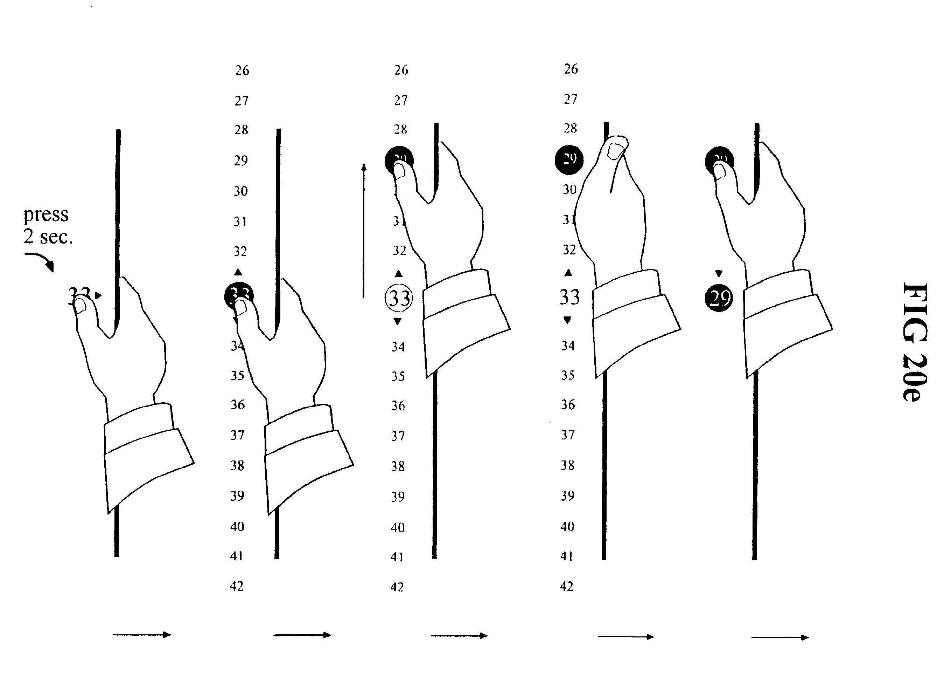

- **Fig. 20**: zeigt am Beispiel einer in der Anzeigenfläche angezeigten Eck- und mittleren Seitenfunktion ein Ausführungsbeispiel der **Fig. 19**, wobei zusätzlich die Seitenrandoperationen im Greifrandbereich der Anzeigeneinheit in einem Dokumentenrand und/oder Rahmen realisiert werden, um ein angezeigtes Dokument nicht zu irritieren bzw. zu stören.

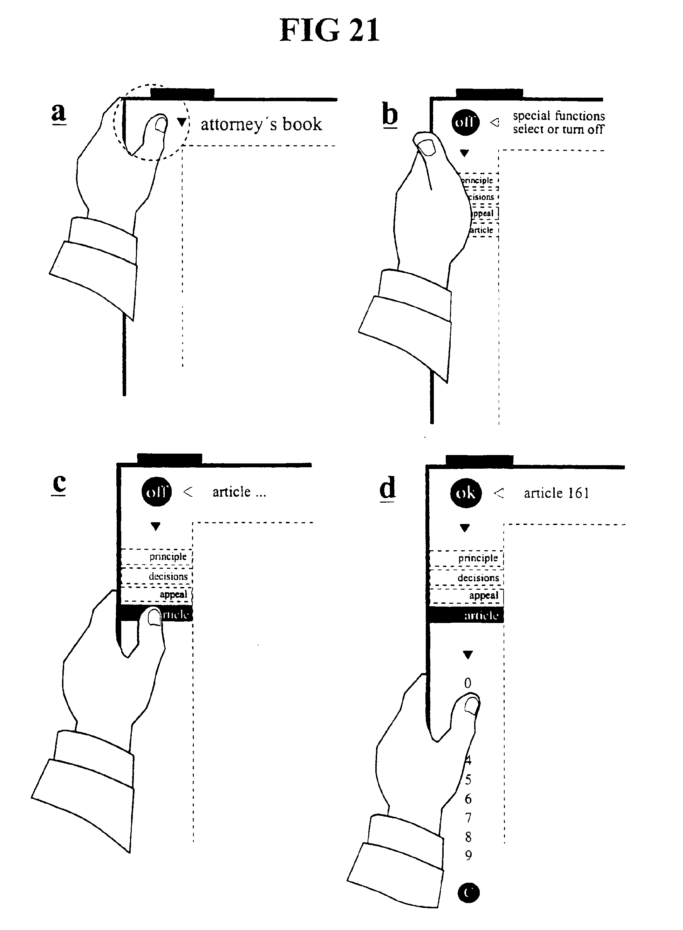

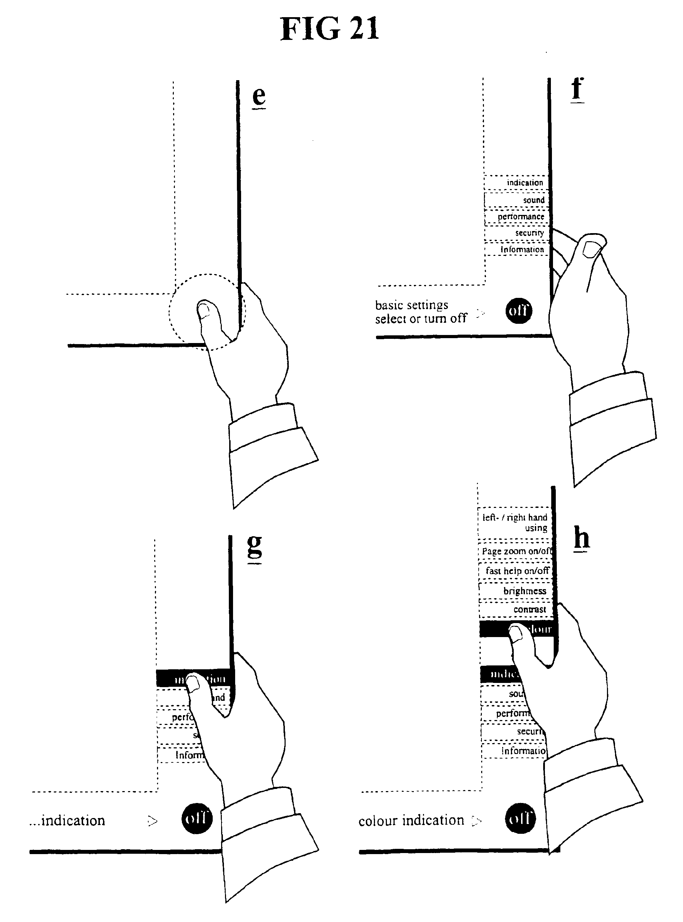

- **Fig. 21**: zeigt am Beispiel zweier in der Anzeigenfläche angezeigter Eckfunktionen ein Ausführungsbeispiel der **Fig. 19****,** wobei zusätzlich die Seitenrandoperationen im Greifrandbereich der Anzeigeneinheit in einem Dokumentenrand und/oder Rahmen realisiert werden, um ein angezeigtes Dokument nicht zu irritieren bzw. zu stören.

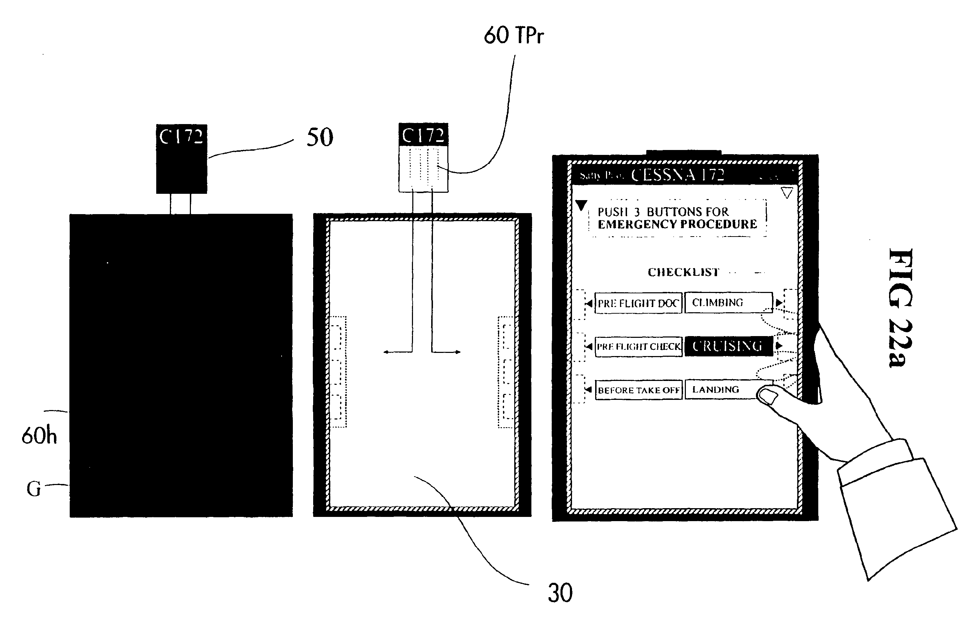

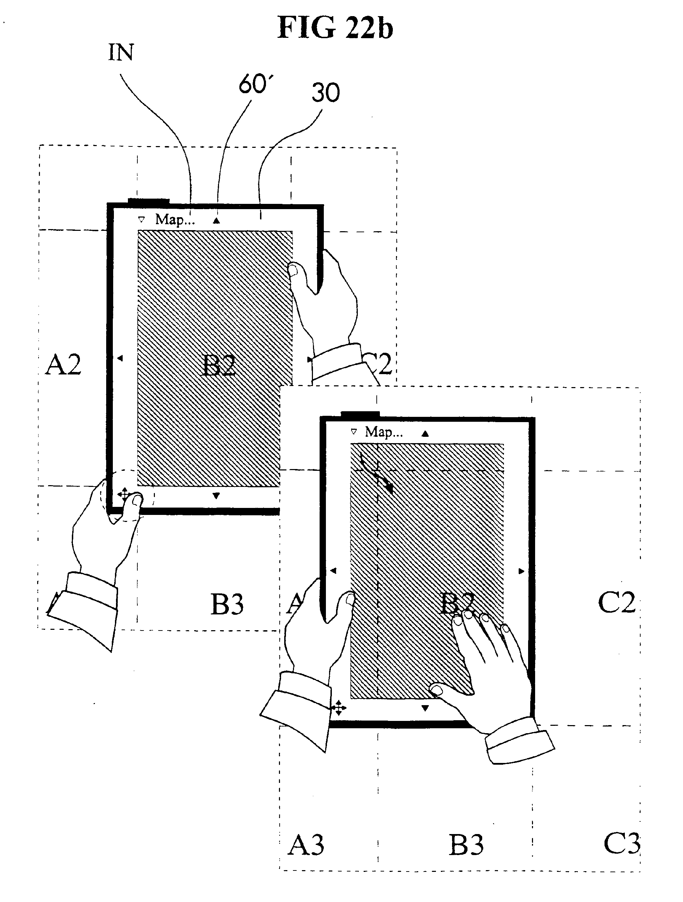

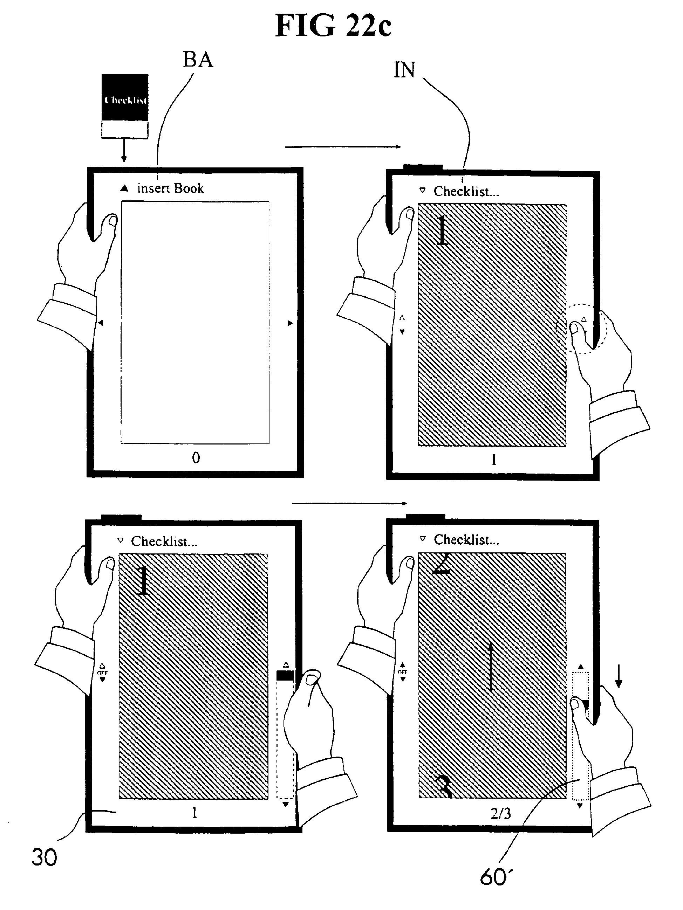

- **Fig. 22**: zeigt am Beispiel einer einteiligen Ausführungsform der vorliegenden Erfindung die selbsttätige und softwaregesteuerte Programmierung von Bedienelementen und die damit verbundene Veränderung der angezeigten Bedieninformationen durch ein gekoppeltes Speichermedium bzw. durch ein initialisiertes Dokument.

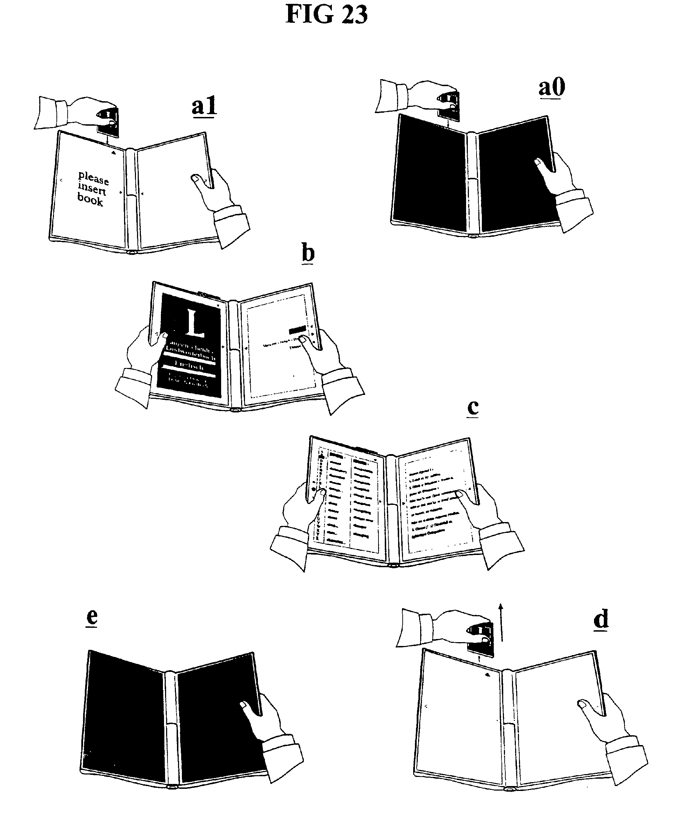

- **Fig. 23**: zeigt am Beispiel einer zweiteiligen Ausführungsform der vorliegenden Erfindung das selbsttätige automatische Umschalten eines Anzeige-Verbundbetriebsmodus beim Koppeln eines zweiten Buchdokumentes mit dem digitalen Buch in einen Anzeige-Getrenntbetriebsmodus mit entsprechender Darstellung des Dokumentes auf der Anzeigenfläche sowie den mit einem umgekehrten Vorgang verbundenen selbsttätigen Umschalten von einem Anzeige-Getrenntbetriebsmodus in einen Anzeige-Verbundbetriebsmodus.

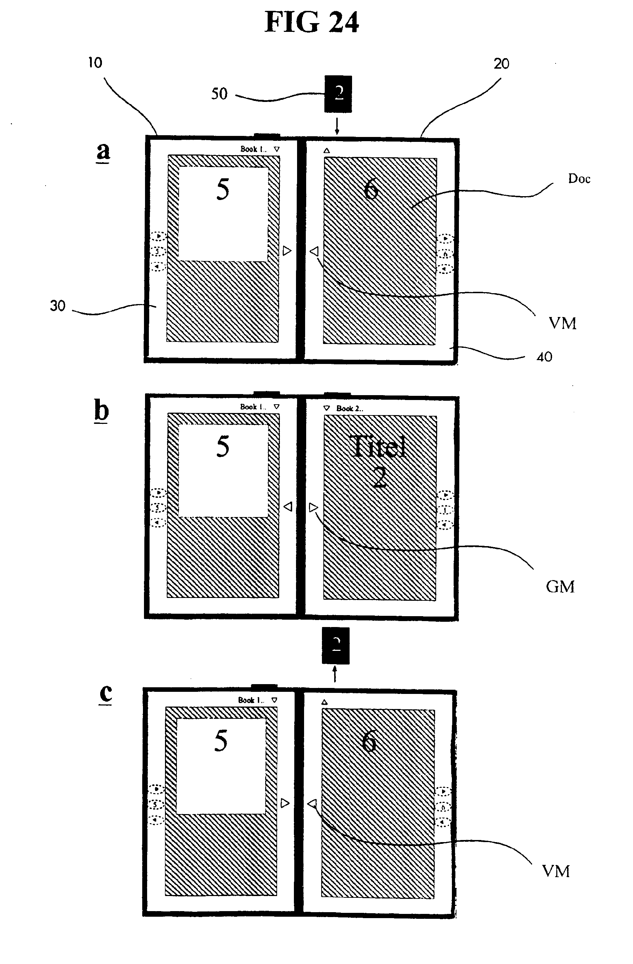

- **Fig. 24**: zeigt am Beispiel einer zweiteiligen Ausführungsform der erfindungsgemäßen digitalen mobilen Anzeigevorrichtung den mit dem Koppeln eines Festkörperspeichers verbundenen selbsttätigen Ein- und/oder Ausschaltprozess der mobilen Anzeigevorrichtung sowie die durch das Koppeln des Festkörpers automatische bewirkte Bestrebung, den Inhalt des Festkörpers einzurichten und/oder Anzuzeigen.

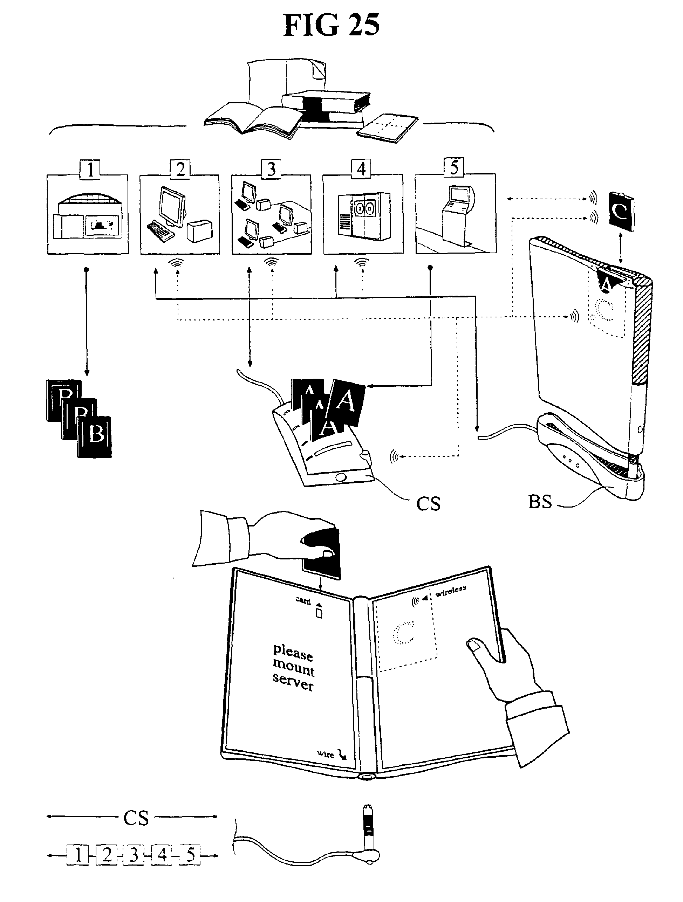

- **Fig. 25**: zeigt am Beispiel einer zweiteiligen Ausführungsform der erfindungsgemäßen digitalen mobilen Anzeigevorrichtung die Kopplungsmöglichkeit unterschiedliche externer Geräte oder Einrichtungen über eine an der Unterseite der mobilen Anzeigevorrichtung angebrachte Multifunktionsschnittstelle, welche als Schnittstelle für Kabelverbinder und/oder der Versorgungsstation ausgelegt ist.

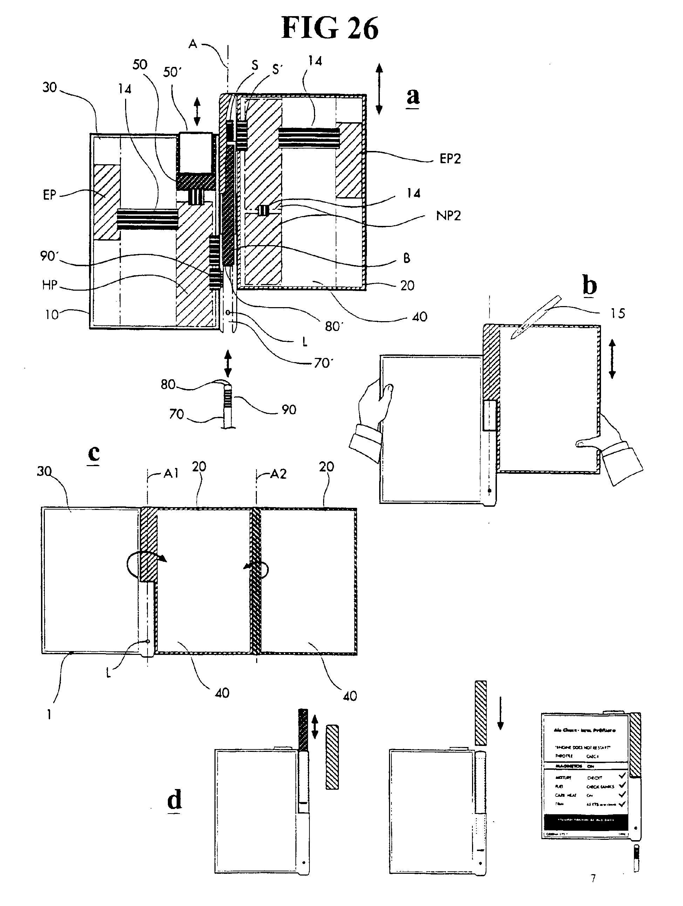

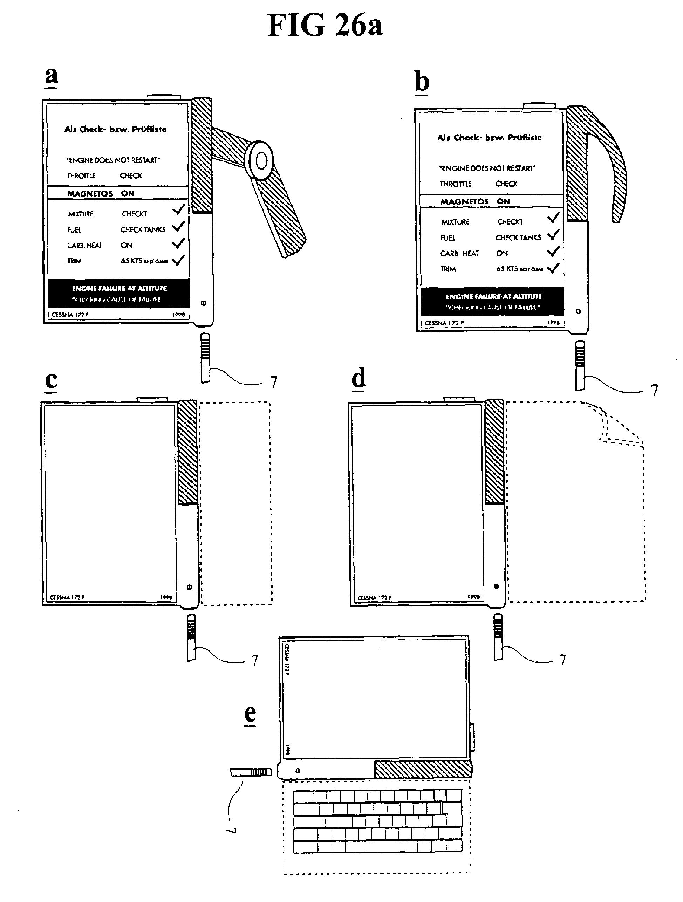

- **Fig. 26**: zeigt beispielhaft eine Hardware Kopplungs- und Entkopplungsmöglichkeit mittels Auf- oder Abstecken unterschiedlicher Hardwareteile über das Drehgelenk einer zweiteiligen mobilen Anzeigevorrichtung, welche beim Abstecken eines Teiles, der Haltegriff eines einteiligen digitalen Buches ist, in der Elektronik untergebracht ist.
- **Fig. 26A**: zeigt am Beispiel einer einteiligen Ausgangsbasis die in **Fig. 26** beschriebene Ankopplung eines beispielhaften Haltegriffs oder eines Buchdeckels aus irgendeinem Material, welches beispielsweise flexibel gezeigt ist, oder die Ankopplung einer Laptoptastatur.

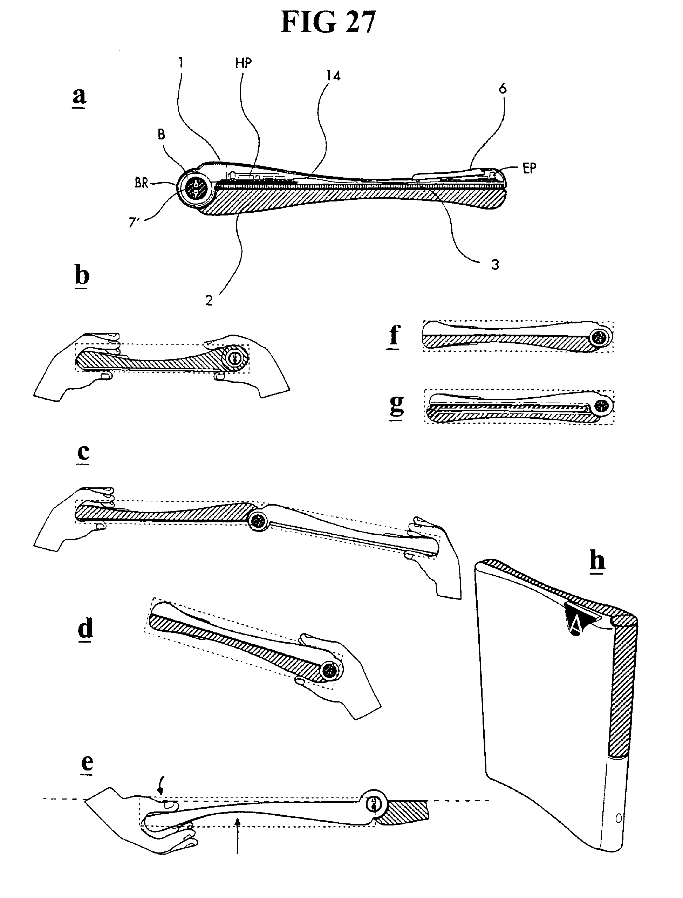

- **Fig. 27**: zeigt die ergonomische Formgebung der vorliegenden Erfindung mit der dadurch erzeugten kompakten Bauweise und der verbesserten Halte- und Bedienmöglichkeit sowohl einer einteiligen wie einer mehrteiligen mobilen digitalen Anzeigevorrichtung.

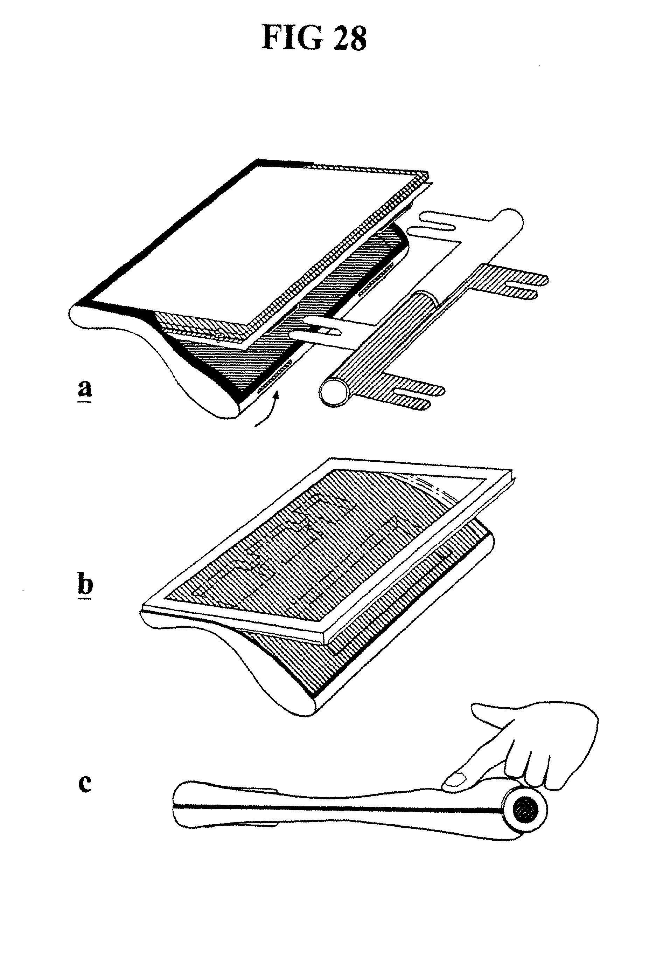

- **Fig. 28**: zeigt eine flexibel ausgebildete erfindungsgemäße digitale mobile Anzeigevorrichtung am Beispiel eines Anzeigenteiles und dessen flexible Ausbildung zumindest des die Anzeigefläche umfassenden Körpers bzw. Gehäuses als Beispiel einer druckkompressiblen Möglichkeit durch z.B. Verwendung eines Elektronik ummantelnden Schaumstoffgehäuses.

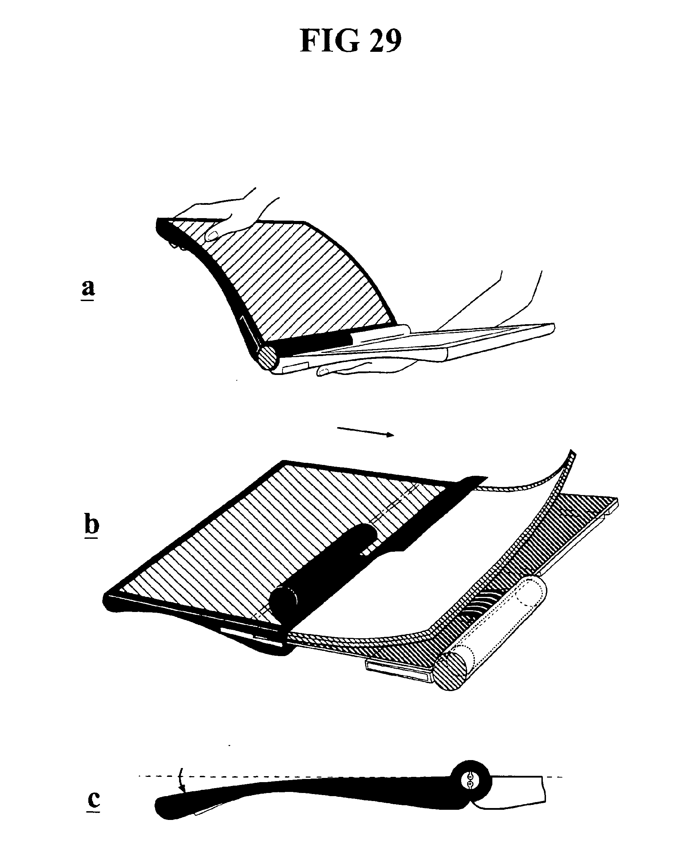

- **Fig. 29**: zeigt eine flexibel ausgebildete erfindungsgemäßes digitale mobile Anzeigevorrichtung am Beispiel eines Anzeigenteiles und dessen flexible Ausbildung von Anzeigefläche und Gehäuse als Beispiel einer zumindest teilbiegsamen Möglichkeit durch Verspannen eines z.B. Polymer-Displays in einem Gehäuserahmen an zwei Seiten.

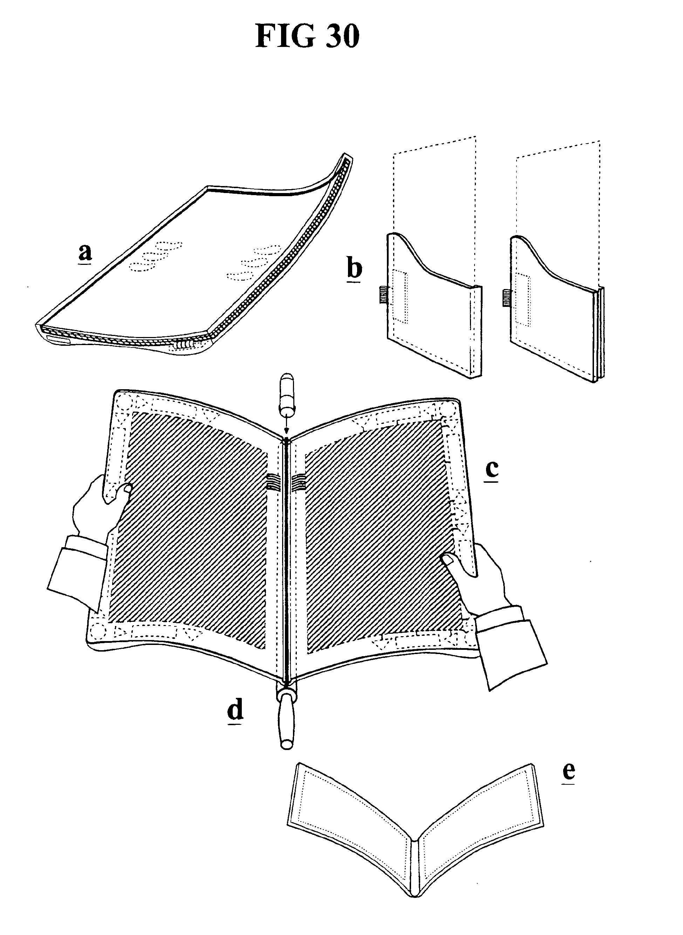

- **Fig. 30**: zeigt mehrere flexibel ausgebildete erfindungsgemäße digitale mobile Anzeigevorrichtungen am Beispiel von ein oder zwei Anzeigenteilen mit Bedienmöglichkeit, bei denen beispielsweise ein oder mehrere Polymer-Display(s) in zumindest teiltransparentem Kunststoff oder kunststoffähnlichem Material zur Festigung verklebt sind.

**Fig. 1** zeigt eine schematische Draufsicht eines anzeigenteilekoppelbaren Ausführungsbeispieles der erfindungsgemäßen digitalen mobilen Anzeigevorrichtung mit zwei Anzeigenteilen 1, 2 im aufgeklappten Zustand des Buchgehäuses mit schematisch angedeuteten Einbauten und Zusatzelementen EP, EP2, HP, NP2, 14, 5, 5', B für die koppelbare digitale mobile Anzeigevorrichtung einschließlich der Trennungs- und Verbindungsmöglichkeiten der wesentlichen Teile derselben. Ein buchartig auf- und zuklappbares Gehäuse der zweiteiligen Ausführungsform weist zumindest eine Klappachse A, einen Hauptteil 1 und zumindest einen Nebenteil 2 auf, wobei die Teile 1, 2 zusammen einen Buchrückenteil bilden. Die Teile 1, 2 sind mechanisch und/oder elektrisch trennbar zusammengesetzt, wobei die erforderlichen elektrischen Verbindungen der beiden Teile 1, 2 beispielsweise mittels Schleifkontakten S, S' hergestellt werden. Zudem sind schematisch eine Haupt-Teilplatine HP, eine Neben-Teilplatine NP und Erweiterungsplatinen EP, EP2 angedeutet, die über Busleitungen 14 miteinander verbunden sind. In dem Gehäuse ist ein Einsteckschacht 5 mit einer Leseeinrichtung zum Einstecken einer PC-Karte 5' oder dgl., die im wesentlichen zum Laden des digitalen Buches mit beispielsweise Buchtexten, Graphiken, Betriebsprogrammen usw. benutzt wird, ausgebildet. Das Gehäuse weist außerdem eine Bedienungseinheit 6 mit mehreren Bedienungselementen, vorzugsweise einzeln oder in Kombination zu betätigenden Tasten, auf (vergl. z. B. **Fig. 3**).

**Fig. 2****:** Das anzeigenteilekoppelbare Ausführungsbeispiel der dargestellten mobilen Anzeigevorrichtung enthält eine Anzeigeeinheit 1, 2, 3, 4, die zumindest zweiteilig ausgebildet und derart angeordnet ist, daß der Hauptteil 1 mit zumindest einem Bildschirm 3 und der zumindest eine Nebenteil 2 mit zumindest einem Bildschirm 4 im aufgeklappten Zustand des Gehäuses dem Benutzer wie Seiten eines Buches zur Ansicht und einer ggf. erforderlichen Bearbeitung zur Verfügung stehen (vergl. auch **Fig. 2**).

**Fig. 3****:** Der Anzeigenteil des Hauptteils des anzeigenteilekoppelbaren Ausführungsbeispieles der erfindungsgemäßen digitalen mobilen Anzeigevorrichtung ist im zugeklappten Zustand des Gehäuses über einen Führungs- und Versorgungsstift 7, der ein Paar von Stromzuführungskontakten 8 und eine Vielzahl von Kontaktringen 9 zur Zu- und Abführung von Information aufweist, in eine Versorgungseinheit VE (siehe **Fig. 5**) mit einer Aufnahmeöffnung VE' zur Zu- und Abführung von Informationssignalen und/oder zur Zuführung von Energie und zur Aufbewahrung des digitalen Buches einsetzbar (vergl. **Fig. 5**). In dem Buchrückenteil BR ist außerdem eine Leuchtdiode L zur Anzeige des Ladestatus der Batterie B angeordnet. Die aneinanderliegenden Kombinationstastenelemente sind im Greifrandbereich angeordnet.

Bei einem abweichenden Ausführungsbeispiel können Haupt- und Nebenteil auch klappbar fest miteinander verbunden sein, ohne dass vorgesehen ist, beide Teile voneinander trennen zu können.

**Fig. 4** zeigt teilweise im Schnitt eine Bodenansicht des Haupt-Teils des fest verbunden und/oder des anzeigenteilekoppelbaren Ausführungsbeispieles des geschlossenen erfindungsgemäßen digitalen Buches zur Benutzung durch z.B. einen Linkshänder und/oder Rechtshänder wenn z.B. eine beschreibbare Anzeigenfläche auf der rechten Seite des digitalen Buches angeordnet ist, wobei die Darstellung die zuvor beschriebenen Elemente enthält. Das Gehäuse enthält eine Führungs- und Versorgungsöffnung 7', Gegenkontakte 8' für die Stromzuführung und/oder Gegenkontakte 9' für die Zu- und Abführung von Information. In dem Buchrückenteil BR (vergl. auch Fig. 3) ist eine vorzugsweise wiederaufladbare Batterie B zur Stromversorgung der elektronischen Einheiten und Bausteine des digitalen Buches und zum Treiben der Bildschirme 3, 4 vorgesehen.

**Fig. 5** zeigt, wie bereits angegeben, eine perspektivische Ansicht des fest verbunden und/oder des anzeigenteilekoppelbaren Ausführungsbeispieles mit zwei Anzeigenteilen des erfindungsgemäßen digitalen Buches im geschlossenen Zustand und eine perspektivische Ansicht einer Versorgungseinheit VE mit einer Aufnahmeöffnung VE'. Der aus der Versorgungseinheit ragende Führungs- und Versorgungsstift dient dabei u.a. zur Stabilisierung des digitalen Buches in der Versorgungseinheit. Die digitale mobile Anzeigevorrichtung ist relativ zu der Versorgungseinheit VE in einem Zustand während einer Entnahme des digitalen Buches oder in einem Zustand während einer Einführung desselben in die Versorgungseinheit VE dargestellt. Die Versorgungseinheit VE weist ein Verbindungskabel 89 zur Zu- und/oder Abführung von Information, beispielsweise von und/oder zu einem PC und/oder einem Modem, und/oder zur Zuführung von Energie zur Versorgung der elektronischen Einheiten und Bausteine und zum Treiben der Bildschirme des digitalen Buches auf. Aneinanderliegende Kombinationstastenelemente sind im Greifrandbereich angeordnet.

**Fig. 6a, Fig. 6b** **u.** **Fig. 6c** zeigen verschiedene perspektivische Ansichten im "aufgeschlagenen" Zustand eines festverbundenen und/oder eines anzeigenteilekoppelbaren Ausführungsbeispieles des erfindungsgemäßen digitalen Buches mit zwei Anzeigenteilen, zum Lesen und/oder z.B. Beschreiben einer beschreibbaren Anzeigenfläche. Das Beschreiben des beschreibbaren Anzeigenfläche, der drucksensitiv ausgebildet ist, erfolgt in dem gezeigten Beispiel mittels eines Bildschirmstiftes 15. Selbstverständlich kann anstelle der Benutzung des Bildschirmstiftes 15 zum Zwecke einer Markierung oder des Auslösens einer bestimmten Funktion eine Fingerkuppe an bestimmter Stelle gegen den Bildschirm gedrückt werden, wie dies im Zusammenhang mit dem sog. Touchscreen bekannt ist.

**Fig. 7a, Fig. 7b, Fig. 7c, Fig. 7d, Fig. 7e** **u.** **Fig. 7f** zeigen, wie bereits angegeben, verschiedene Darstellungen des fest verbundenen und/oder des anzeigenteilekoppelbaren Ausführungsbeispieles mit einem, zwei und drei Anzeigenteilen des erfindungsgemäßen digitalen Buches in verschiedenen Benutzungsfällen, aus welchen Darstellungen verschiedene Vorteile des digitalen Buches ersichtlich sind.

**Fig. 8** zeigt die Darstellung einer Aufbaumöglichkeit eines Neben-Teils 2a, 2b in Form eines Doppelbildschirms 4a, 4b ähnlich einem Faltplan oder einem Terminplaner im "aufgeschlagenen" Zustand des digitalen Buches für einen Benutzungsfall mit drei Bildschirmen 3, 4a, 4b. In der gezeigten Ausführungsform weist das Gehäuse des digitalen Buches zwei Klappachsen A1, A2 auf.

**Fig. 9a** **u.** **Fig. 9b** zeigen Darstellungen der selben Ausführungsform, wie sie in **Fig. 8** gezeigt ist, im zusammengefalteten oder "zugeschlagenen" Zustand des digitalen Buches.

**Fig. 10** zeigt, wie bereits angegeben, ein ein Blockschaltbild des anzeigenteilekoppelbaren Ausführungsbeispieles des erfindungsgemäßen digitalen Buches der Konfiguration von Einheiten und Bausteinen zum Betrieb des digitalen Buches. Außer den zuvor beschriebenen Elementen sind gemäß diesem Blockschaltbild eine Anzeigeeinheit D mit zwei Bildschirmen 3, 4, zwei Bildschirmtreiber oder Graphikkarten 3', 4', eine Steuereinheit 10 mit Mitteln zur Aufnahme, Speicherung, Verarbeitung und Wiedergabe von Information, wobei die Information in Form von Text-, Bild, Graphik-, Audio- und/oder Videoinformation gegeben sein kann, eine Schnittstellen-Einheit 11 zur Zu- und Abführung von Information und zur Zuführung von Energie mit einer Informationsschnittstelle 12 und einer Stromversorgungseinrichtung 12 zur Energieversorgung der Einheiten D, 10, 11 aus der Versorgungseinheit VE vorgesehen. Die Steuereinheit 10 enthält einen EPROM, einen ROM, einen RAM, eine CPU, eine Steuereinrichtung ST und eine Treiberschaltung TR, welche Elemente über eine Busleitung BL miteinander verbunden sind. Die Bildschirmtreiber oder Graphikkarten 3', 4', die Bedienungs-Einheit 6 mit den Bedienungselementen, die Steuereinheit 10 und die Informationsschnittstelle 12 sind über die bereits genannte Busleitung 14 miteinander verbunden.

**Fig. 11** zeigt die Darstellung des fest verbunden und/oder anzeigenteilekoppelbaren Ausführungsbeispieles mit zwei Anzeigenteilen des erfindungsgemäßen digitalen Buches, und die optimierten Benutzerschnittstellen zur einfachen Bedienung durch einen Laienanwender und zur Reduzierung von technischen Informationen, mit fünf einzelnen Teilaspekten.

**Fig. 11** zeigt ein erfindungsgemäßes digitales Buch mit einer optimierten Benutzerschnittstelle zur Vereinfachung der Bedienung mit minimalen technischen Informationen, mit zumindest einem auf einer rechten und/oder linken Seite des digitalen Buches befindlichen Manipulations-bereich 60h insbesondere zur Manipulation der angezeigten Informationen und/oder zur Bewirkung einer Betriebszustands- und/oder Einstellungsänderung und/oder zum Laden von Dokumenteninformationen und/oder zum Umschalten in einen anderen Betriebsmodus, wobei in diesem Ausführungsbeispiel der Manipulationsbereich 60h rückseitig (d.h. auf der der Anzeigenfläche abgewandten Seite) angeordnete Funktionstasten F1, F2, F3 sowie vorderseitig einen drucksensitiven Eingabebereich 60t aufweist. Der Eingabebereich 60t kann gegebenenfalls auch mit anderen technischen Mitteln realisiert werden, z.B. kapazitative Näherungsschalter, Miniaturtasten.

Dabei ist der Manipulationsbereich 60h derart angeordnet, daß Bedienhandlungen möglichst an einer Stelle, an der die Anzeigeneinheit 10 gehalten wird, mit den Fingern der haltenden Hand ausgeführt werden können. In Fig. 11 ist beispielhaft eine obere linke Position aufgezeigt. Vorzugsweise ist eine Position auf der mittleren Seite einer Anzeigenseite vorgesehen, da die mittlere Position eine neutralere Ausgangsposition zur Bedienung darstellt, wie in der späteren Figurenbeschreibung ersichtlich, wobei vorzugsweise drei Kombinationstasten vorgesehen sind.

Offenbart ist eine mobile Anzeigevorrichtung mit einer ersten erfindungsgemäß optimierten Benutzerschnittstelle zur Vereinfachung der Bedienung mit minimalen technischen Informationen, mit zumindest einer auf einer rechten und/oder linken Seite des digitalen Buches befindliche Eingabeeinheit zur Manipulation der angezeigten Informationen und/oder zur Bewirkung einer Betriebszustands- und/oder Einstellungsänderung und/oder zum Laden von Dokumenteninformationen und/oder zum Umschalten in einen anderen Betriebsmodus, jedoch nicht darauf beschränkt. Das Haupteingabeelement bzw. die Tastenelemente sind vorteilhafterweise auf der Anzeigenseite abgewandten Seite 60h der mobilen Anzeigevorrichtung derart im Greifrand angeordnet, daß Bedienhandlungen möglichst an einer Stelle, an der die Anzeigeneinheit 10 gehalten wird, mit den Fingern der haltenden Hand ausgeführt werden können.

In **Fig. 11** ist beispielhaft eine obere linke Position aufgezeigt, vorzugsweise ist eine Position auf der mittleren Seite einer Anzeigenseite vorgesehen, da die mittlere Position eine neutralere Ausgangsposition zur Bedienung darstellt, wie in späteren Figurenbeschreibung ersichtlich.

Ebenso nicht einschränkend ist die Verwendung von drei Kombinationstasten, da diese vorzugsweise in dem gezeigten Anschauungsbeispiel Verwendung finden, jedoch durch andere Bedienelemente ersetzt werden können, sofern diese zumindest teilweise Aufgaben mittels ihrer Eigenschaften erfüllen. Dazu gehören beispielsweise das Selektieren und Aktivieren einer auf der Anzeigenfläche angezeigten Information und/oder das Bewegen von Seiten und/oder zumindest die Möglichkeit, eine erste Information auf der Anzeigenfläche anzuzeigen und/oder eine erste bereits angezeigte Information z.B. durch Deaktivieren einer Aktivierungssperre (ES) zur Bedienung über irgend eine dafür vorgesehene Eingabe z.B. über Touch- Screen vorzugsweise ebenfalls im seitlichen Greifrandbereich der Anzeige (20) freizugeben. Das aufgezeigte Anschauungsbeispiel lässt offen ob nur reale Bedienelemente und/oder in Kombination mit einer sensitiven Anzeigenfläche und/oder in Kombination mit Sprache bedient wird, da es in erster Linie davon abhängt, wie in späteren Figuren gezeigt, wie die Eigenschaften des Anzeigemittels geplant ist, z.B. als Touch-Screen oder als reines Anzeigendisplay. Grundsätzlich können auch andere Bedienelemente an anderer Stelle der Anzeigeneinheit angebracht sein ohne den Schutzumfang zu beeinflussen.

Die Bedienelemente sind in unterschiedlicher Ausführung und Anordnung vorgesehen. Das Bedienfeld kann beispielsweise auch mit Slide-Pad und/oder Track-Ball und/oder mit einer Mehrfunktionstaste etc. ausgestattet sein oder die entsprechenden Tastenfelder können als Induktionsfelder bzw. Schalter ausgebildet sein.

Offenbart ist ferner eine mobile Anzeigevorrichtung mit einer weiteren erfindungsgemäß optimierten Benutzerschnittstelle zur Vereinfachung der Bedienung mit minimalen technischen Informationen, mit zumindest einer oder mehreren sensitiv ausgebildeten Anzeigefläche(n) über die mittels Berühren einer beliebigen jedoch vorher festgelegten Stelle, eine erste Bedieninformation einer unsichtbaren Funktionsauswahl bzw. Bedieninformation bereitgestellt, d.h. angezeigt wird, die weiter zu bedienen ist. Dies geschieht vorzugsweise mittels Identifizierung einer Funktionsauswahl bzw. anzuzeigenden Funktionsgruppe über eine festgelegte Positionsinformation (60'V), welche beispielsweise eine erste Ecke der Anzeigenfläche bietet und/oder eine mittlere Seite der Anzeigenfläche. Vorzugsweise ist vorgesehen eine Vielzahl irritierender und störender Funktionen bzw. Bedieninformationen welche auf der Anzeigenfläche zur Bedienung dargestellt werden sollen, im normalen Lesemodus ausgeblendet bzw. unsichtbar zu halten und nur bei Bedarf entsprechende Funktions- bzw. Bedieninformationen zur Verfügung zu stellen. Dazu können entweder alle Funktionen auf einmal oder eine Funktionsgruppe getrennt von zumindest einer weiteren Funktionsgruppe sichtbar gemacht, d.h. bereitgestellt werden, um diese zu Bedienen. Der Vorteil ist eine irritationsfreie bzw. ungestörte angezeigte Dokumentenseite ähnlich eines Buches (Anschauungsbeispiele bieten die Figuren 19, 20, 21) Eine weitere vorteilhafte Weiterbildung, jedoch nicht dadurch beschränkt, welche das Einrichten von Funktions- bzw. Bedieninformationen durch ein initialisiertes Dokument bewirkt, ergibt die Möglichkeit die Anzeigenfläche in Bereiche zu teilen, die es dem Laienanwender ermöglicht hinsichtlich spezieller Funktionen der angezeigten Publikation, eine sinnvolle Bedienung vorzunehmen, wenn z.B. ein gekoppelter Speicher mit Dokumenteninformationen 50' alle zur Bedienung dieses Dokumentes notwendigen Funktionen bzw. Bedieninformationen in der Anzeigeeinheit an der Stelle unsichtbar zur Verfügung stellt, an der sich der gekoppelte Speicher befindet. So hat der Laienanwender die Möglichkeit, nur die Bedieninformationen anzufordern, die unmittelbar mit dem initialisierten Dokument in Verbindung stehen.

Offenbart ist ferner eine mobile Anzeigevorrichtung mit einer weiteren erfindungsgemäß optimierten Benutzerschnittstelle zur Vereinfachung der Bedienung mit minimalen technischen Informationen, mit zumindest einer ersten vorzugsweise im oberen Teil des digitalen Buches vorgesehen Festkörperkopplungsvorrichtung 50, vorzugsweise für eine Speicherkarte 50', jedoch nicht darauf beschränkt, welche mittels Kopplung vorzugsweise durch Einschieben des Festkörperelementes einen oder mehrere Prozesse im digitalen Buch auslöst, die eine Bedienung von Seiten eines Laien insofern erleichtert, dass z.B. der Inhalt des gekoppelten Festkörpers ohne weiteres Zutun des Anwenders bestrebt ist, die Aufgabe des, mit beispielsweise Einschieben des Körpers 50' in die dazu ausgebildete Aufnahmeöffnung 50, bezweckte Vorhaben auszuführen. Beispielsweise wird der Inhalt einer Speicherkarte mit Buchinformationen ohne weitere Handlung durch den Anwender nach erfolgreicher Koppelung angezeigt, oder zumindest eine erste Information zur Verfügung gestellt die vom Anwender nur verifiziert werden muß (**Fig 24**). Die dazu notwendige Aufforderung zur Initialisierung kommt dabei vorzugsweise vom digitalen Buch, nach Identifizierung des gekoppelten Festkörpers. Hierzu kann die bereits bekannte Plug- and Play-Technologie eingesetzt werden, um die Erkennung des Festkörpers zu gewährleisten (Siehe dazu auch **Fig. 22** oder **Fig. 23**).

Eine weitere vorteilhafte erfindungsgemäße Einrichtung zur einfachen Bedienung mit minimalen technischen Informationen, mittels Kopplung eines oder mehrerer Festkörper mit dem erfindungsgemäßen digitalen Buch ist, dass diese Festkörperelemente Software- und/oder Hardwarebestandteile wie z.B. Elektronik (integrierte Schaltkreise, Batterie, Speicher, Sender und/oder Empfänger für kabellose Informationsübertragung, etc.) enthalten, die in irgend einer Form in vorgenannter Art, vorzugsweise ohne weiteres zutun des Anwenders, das Leistungsspektrum hinsichtlich der anzuzeigenden Information, welche über das Festkörpermittel in die digitale mobile Anzeigevorrichtung gelangt, erweitert und/oder Bedienfunktionen übernimmt, die der Anwender durch eine fehlende alphanumerische Tastatur nicht oder nur eingeschränkt ausführen kann.

Eine weitere vorteilhafte Einrichtung zur einfachen Bedienung mit minimalen technischen Informationen, mittels Kopplung eines oder mehrerer Festkörper mit dem erfindungsgemäßen digitalen Buch ist das mit der Kopplung eines Festkörperspeichers mit dem digitalen Buch bewirkte selbsttätige Einrichten und/oder Einstellen des digitalen Buches beispielsweise durch die Programmierung der Funktionstasten des digitalen Buches zur optimalen Bedienung des auf dem Festkörperspeicher gespeicherten Dokumentes (**Fig. 22**) und der entsprechenden Bedieninformationen und/oder beispielsweise das automatische Umschalten von einem Anzeigegetrennt-Betriebsmodus in einen Anzeigeverbund- Betriebsmodus und umgekehrt, vorzugsweise selbsttätig durch Koppeln und/oder Entkoppeln eines ersten und/oder zweiten Festkörperspeichers mit anzuzeigenden Dokumenteninformationen (**Fig. 23**).

Offenbart ist auch eine mobile Anzeigevorrichtung mit einer weiteren erfindungsgemäß optimierten Benutzerschnittstelle zur Vereinfachung der Bedienung mit minimalen technischen Informationen. Die Kopplung mittels Kabelverbindern ist über vorzugsweise nur eine Schnittstelle auf der unteren Seite des digitalen Buches 70', vorzugsweise im Buchdrehgelenk bei zweiteiligen oder mehrteiligen Anzeigenteilen, welche bei einteiligen Anzeigenteilen der Haltegriff ist, zum Aufnehmen beispielsweise eines Klinkensteckers 70', vorgenommen. Dieses hat den Vorteil das die Schnittstelle robust und unkompliziert zu bedienen ist, und die für den Kontakt notwendigen Kontaktstellen auf beliebiger Länge des Klinkensteckers untergebracht werden können, da der Einschub nicht durch die konstruktionsbedingte bauliche Tiefe des digitalen Buches behindert wird. Die vorzugsweise nur eine Schnittstelle ist derart ausgebildet, das die Elektronik des digitalen Buches mittels Signale zur Übertragung von Daten beispielsweise bidirektional und seriell und/oder Energie wirksam mit unterschiedlichsten Geräten, Einrichtungen oder Vorrichtungen verbunden werden kann. Hierzu können unterschiedliche Peripheriegeräte gekoppelt werden, wie z.B. Drucker und/oder Telefon und/oder Modem und/oder PCs und/oder Laptops und/oder Ladegeräte welche nur beispielhaft sind. Hierzu braucht der Laienanwender lediglich den entsprechenden Kabelverbinder einzustecken und eventuell soweit vorgesehen zu arretieren. Eine weiter Funktion dieser Schnittstelle ist die Aufnahme des Führungs- und Versorgungsstiftes der Buchstation, welche die Aufgabe hat Die digitale mobile Anzeigevorrichtung mit Energie und/oder Dateninformationen zu versorgen, welches beispielsweise je nach Ausführungsform an der Buchstation oder im digitalen Buch einzustellen ist. Gleichermaßen dient dieser Versorgungsstecker als Stabilisierungsstift (**Fig. 5****/****7**) des hochkant aufzusteckenden digitalen Buches, als zweiteilig ausgebildetet Buch im geschlossenen Zustand und/oder als einteiliges Buch über die im Haltegriff integrierte Schnittstelle im offenen Zustand (nicht gezeigt).

**Fig. 12** zeigt die Darstellung unterschiedlicher Erscheinungsformen des erfindungsgemäßen digitalen Buches, jedoch nicht darauf beschränkt, als ein- oder mehrteiliger, festverbundene oder Anzeigenteile-koppelbare Ausführung.

**Fig. 13** zeigt die dem erfindungsgemäßen digitalen Buch zu Grunde liegenden Teilaspekte zur Optimierung d.h. zur Vereinfachung der Bedienung bei gleichzeitiger Reduzierung von irritierenden Informationen und/oder technischen Ausbildungen.

Durch die Bündelung der Aufgaben und der entsprechenden auf einen Bereich konzentrierten Eingabemöglichkeiten

Es sind zwei Teilbereiche 1 und 2 gezeigt die die entscheidenden Aspekte der Erfindung welche im Zusammenhang stehen, aber auch jeweils getrennt voneinander eine entscheidende Rolle spielen.

Ausgehend von einem Anschauungsbeispiel, eines aufgeschlagenen digitalen Buches auf der linken Seite der **Fig. 13**, welches die Manipulation angezeigter Informationen mittels einem Cursor zeigt, sind im Bereich 1 der **Fig. 13** alle Teilaspekte die gemeinsam und/oder getrennt voneinander eine entscheidende Rolle zur Vereinfachung der Bedienung des digitalen Buches stehen aufgezeigt. Dazu gehören die Reduzierung des Bedienaufwandes und der Bedieninformation über die Möglichkeit der Bedienfeld- bzw. Tastenprogrammierung 60TPr eines initialisierten Dokumentes Doc , welches vorzugsweise beim Koppeln des informationstragenden Festkörperspeichers 50 selbsttätig ausgeführt wird 1a.

Ein weitere Aspekt 1 b ist die Reduzierung des Bedienaufwandes und der Bedieninformation durch die Kombination von Eingabemöglichkeiten wie beispielsweise reale Bedienelemente 60, welche mit virtuellen Bedienelementen 60' und 60'V und/oder mit Spracheingabe SpE, wobei die realen Bedienelemente vorzugsweise mit sich selbst zu kombinieren sind, wodurch sich ebenfalls die Anzahl der benötigten Bedienelemente reduzieren läßt. In dem Anschauungsbeispiel werden drei Tasten verwendet 60, mit denen auf vorgenannte Art eine Vielzahl von Funktionen ausführt werden können. Eine weitere Optimierung der Bedienfunktion ist die Verteilung der Bedienelemente auf die Finger der Anzeigemittel haltenden Hand 1b 1, 2, 3, 4, 5 derart, dass vorzugsweise Zeigefinger 1 Mittelfinger 2 und Ringfinger 3 die Funktionstasten bedienen, was eine wesentlich schnellere Bedienung ermöglicht, während der kleine Finger zur Arretierung des Anzeigenteils dient und der Daumen frei beweglich ist um gegebenenfalls in Kombination mit Sprache und/oder mit den realen Bedienelementen oder für sich allein eine Bedienung der virtuellen Bedienelemente, dass heißt auf der Anzeigenfläche dargestellte Eingabeelemente 60' bedienen kann. Hierzu sind die realen Bedienelemente 60 vorzugsweise auf der Rückseite einer Anzeigenfläche angeordnet.

Eine weitere Optimierung der Bedienfunktionen 1c ist die komprimierte Anordnung der Bedienelemente AB auf einen Bereich FBh, der beim Halten der Anzeige von den Fingern bedient werden kann, wobei der Bereich vorzugsweise der Bereich im seitlichen Greifrandbereich ist wo sich die anzeigehaltende Hand am häufigsten aufhält, d.h. unter ergonomischen Gesichtspunkten im mittleren Bereich einer Anzeigenseite, da diese Stelle am ausgewogensten zum Halten der Anzeigeeinheit ist und in Bezug auf die Links- oder Rechtshänderbedienung am neutralsten zu Bedienen ist.

Ausgehend von einem weiteren Anschauungsbeispiel, bei der sich ein aufgeschlagenes digitales Buch auf der rechten Seite der **Fig. 13**, bei dem keine Bedienelemente zu sehen sind, sind im Bereich 2 der **Fig.13** alle Teilaspekte der gemeinsam und/oder getrennt voneinander eine entscheidende Rolle zur Reduzierung der beim Lesen eines Dokumentes störenden bzw. irritierenden Elemente aufgezeigt.

Dazu gehören die Reduzierung der realen Bedienelemente 60 auf ein notwendiges Minimum und/oder das Verbergen von Bedienelementen 60h z.B. auf die der Anzeigenseite abgewandten Seite der Anzeigeneinheit 2b.In **Fig. 2b** wird das Verbergen von virtuellen, d.h. über die Anzeigenfläche zu bedienenden Manipulationselementen d.h. Funktionselementen 60'aufgezeigt, die erst bei Bedarf gemeinsam oder getrennt voneinander sichtbar gemacht werden, derart das keine erste Funktionsinformation zur Identifizierung z.B. einer Menüauswahl bereitsteht, und nur die Lage einer ersten Eingabemöglichkeit 60'EF relativ zur Anzeigenfläche eine Orientierung liefert, was für Funktionen bereitzustellen sind. vorzugsweise dienen zur Orientierung die Ecken 60'EF oder mittleren Seiten (nicht angezeigt) der Anzeigenfläche.

**In** **Fig. 2b** wird weiterhin ein Aktivierungsschutzfeld 60ES gezeigt, welches eine versehentliche Aktivierung einer einer angezeigten oder nicht angezeigten Funktion 60' im Greifrandbereich vermeidet. Hierzu wird mittels einer Eingabe über z.B. Sprache SpE oder einem realen Bedienelement 60', 60 oder einer anderen Stelle auf der Anzeigenfläche beispielsweise eine Ekke 60MSF der Eingabeschutz aufgehoben um eine Funktion ausführen zu können. Eine weitere Möglichkeit der Reduzierung störender Elemente 2c bezieht sich auf bereits bereitgestellte Bedien- bzw. Funktionsinformationen, die zur Vermeidung von Irritation eines angezeigten Dokumentes in einem Rand oder einem Rahmen neben dem angezeigten Dokument, ähnlich dem Buchrand oder dem Passepartout eines Bildes neben den Dokument 60FR befinden.

Die auf einen bestimmten Bereich konzentrierte Bedienung mit vorzugsweise rückseitigen oder seitlichen Kombinationstasten welche vorteilhafterweise nicht mehr wie drei voneinander getrennte Bedienelemente sein sollten, jedoch nicht darauf beschränkt, ist eine bessere Verteilung einer Vielzahl von Aufgaben und die damit verbunden Funktionen unter Berücksichtigung einer möglichst ruhigen bzw. entspannten Haltung bei Tragen bzw. Halten der Anzeigeeinheit gegeben.

**Fig. 14** zeigt am Beispiel eines aufgeschlagenen, zweiteiligen erfindungsgemäßen digitalen Buches, jedoch nicht darauf beschränkt, eine Bereitstellung von Bedieninformationen und deren Weiterbedienung mittels der Anzeigenfläche abgewandten Bedienelemente und/oder mittels der Eingabe über eine sensitive Eingabefläche, und die Bereitstellung einer ersten Funktionsinformation sowie Weiterbedienung über die sensitive Eingabefläche.

**Fig. 15** zeigt Funktionsmöglichkeiten einer Minimalkonfiguration von Bedienelementen des erfindungsgemäßen digitalen Buches, mit einer ersten Funktion zur Ausführung einer ersten Aufgabe, am Beispiel des Bereitstellens einer Auswahlinformation auf der Anzeigefläche und der nach der ersten Bedienung folgenden selbsttätigen und softwaregesteuerten Umprogrammierung der Bedienelemente zur Erfüllung einer zweiten Aufgabe, z.B. dem Selektieren und/oder Aktivieren einer ausgewählten Funktion oder dem Ausschalten der Bereitstellung.

**Fig. 16** zeigt die generelle Kombinationsmöglichkeit eines Eingabefeldes des erfindungsgemäßen digitalen Buches, am Beispiel von drei realen Bedienelementen und deren Programmierung hinsichtlich einer ersten Funktion und durch Kombinationsbedienung möglichen weiteren ersten Funktionen, sowie der selbsttätigen softwaregesteuerten Umprogrammierung der Bedienelemente durch einen ersten Bedienschritt, zur Erfüllung einer anderen Aufgabe in einem zweiten Bedienungsschritt.

**Fig. 17** zeigt am Beispiel eines ein-/ und zweiteiligen Anzeigenteils des erfindungsgemäßen digitalen Buches, die Programmierung der vorzugsweise rückseitig angeordneten, drei Bedienelemente für ein digitales Buch, bei welchem eine Bedienung nur über reale Bedienelemente bewerkstelligt wird.

**Fig. 18** zeigt am Beispiel eines ein-/ und zweiteiligen Anzeigenteils, mit einer zusätzlichen Möglichkeit der Eingabe über die Anzeigenfläche (Touchscreen), die Programmierung der vorzugsweise rückseitig angeordneten, drei Bedienelemente für ein digitales Buch, bei welchem die regalen Bedienelemente in einer ersten Funktion die Bereitstellung von Bedieninformationen auf der Anzeigenfläche realisiert, zur anschließenden Weiterbearbeitungs- bzw. Bedienungsmöglichkeit über eine sensitive Anzeigenfläche.

**Fig. 19** zeigt am Beispiel eines ein-/ und zweiteiligen Anzeigenteils, die Programmierung der vorzugsweise rückseitig angeordneten, drei Bedienelemente für ein digitales Buch, als Schnellfunktions-Bedienelemente für häufige Routineoperationen am Beispiel einer ersten Funktion einfach zu betätigenden Bedienelemente, beispielsweise zum Bewegen der Seiten innerhalb eines Buchdokumentes, und die Bearbeitung von nicht so häufig gebrauchten Funktionen über die Anzeigenfläche, wobei diese über das Berühren einer Stelle in der Anzeigenfläche bereitgestellt werden, und beispielsweise durch die Initialisierung eines gekoppelten Buchdokumentes programmiert sind.

**Fig. 20** zeigt am Beispiel einer in der Anzeigenfläche angezeigten Eck- und mittleren Seitenfunktion ein Ausführungsbeispiel der Figur 19 wobei zusätzlich die Seitenrandoperationen im Greifrandbereich der Anzeigeneinheit in einem Dokumentenrand und/oder Rahmen realisiert werden um ein angezeigtes Dokument nicht zu irritieren bzw. zu stören.

**Fig. 21** zeigt am Beispiel zwei in der Anzeigenfläche angezeigten Eckfunktionen ein Ausführungsbeispiel der Figur 19 wobei zusätzlich die Seitenrandoperationen im Greifrandbereich der Anzeigeneinheit in einem Dokumentenrand und/oder Rahmen realisiert werden um ein angezeigtes Dokument nicht zu irritieren bzw. zu stören.

**Fig. 22** zeigt am Beispiel einer einteiligen Ausführungsform der vorliegenden Erfindung die selbsttätige und softwaregesteuerte Programmierung von Bedienelementen und damit verbundene Veränderung der angezeigten Bedieninformationen durch ein gekoppeltes Speichermedium bzw. initialisiertes Dokument.

**Fig. 23** zeigt am Beispiel einer zweiteiligen Ausführungsform der vorliegenden Erfindung das selbsttätige automatische Umschalten eines Anzeige-Verbundbetriebsmodus beim Koppeln eines zweiten Buchdokumentes mit dem digitalen Buch in einen Anzeige-Getrenntbetriebsmodus mit entsprechender Darstellung des Dokumentes auf der Anzeigenfläche sowie den mit einem umgekehrten Vorgang verbundenen selbsttätigen Umschalten von einem Anzeige-Getrenntbetriebsmodus in einen Anzeige-Verbundbetriebsmodus

**Fig. 24** zeigt am Beispiel einer zweiteiligen Ausführungsform des erfindungsgemäßen digitalen Buches, der mit dem Koppeln eines Festkörperspeichers verbundene selbsttätige Ein- und/oder Ausschaltprozess des digitalen Buches, sowie die durch das Koppeln des Festkörpers automatische bewirkte Bestrebung den Inhalt des Festkörpers einzurichten und/oder anzuzeigen.

**Fig. 25** zeigt am Beispiel einer zweiteiligen Ausführungsform des erfindungsgemäßen digitalen Buches, die Kopplungsmöglichkeit unterschiedliche externer Geräte oder Einrichtungen über eine an der Unterseite des digitalen Buches angebrachte Multifunktionsschnittstelle, welche als Schnittstelle für Kabelverbinder und/oder der Versorgungsstation ausgelegt ist

**Fig. 26** zeigt beispielhaft, eine Hardware Kopplungs- und Entkopplungsmöglichkeit mittels Auf- oder Abstecken unterschiedlicher Hardwareteilen über das Drehgelenk eines zweiteiligen digitalen Buches welche beim Abstecken eines Teiles, der Haltegriff eines einteiligen digitalen Buches ist in der Elektronik untergebracht ist.

**Fig. 26a** zeigt am Beispiel einer einteiligen Ausgangsbasis die in Fig. 26 beschriebene Ankopplung eines beispielhaften Haltegriffs oder eines Buchdeckels aus irgendeinem Material welches beispielsweise flexibel gezeigt ist oder die Ankopplung einer Laptoptastatur oder einer Kartenstation.

**Fig. 27** zeigt die ergonomische Formgebung der vorliegenden Erfindung mit der dadurch erzeugten kompakten Bauweise und der verbesserten Halte- und Bedienmöglichkeit, sowohl eines einteiligen wie eines mehrteiligen digitalen Buches.

**Fig. 28** zeigt ein flexibel ausgebildetes erfindungsgemäßes digitales Buch am Beispiel eines Anzeigenteiles, und deren flexible Ausbildung zumindest des Anzeigefläche umfassenden Körpers bzw. Gehäuse als Beispiel einer druckkompressiblen Möglichkeit durch z.B. Verwendung eines elektronikummantelndes Schaumstoffgehäuse

**Fig. 29** zeigt ein flexibel ausgebildetes erfindungsgemäßes digitales Buch am Beispiel eines Anzeigenteiles, und deren flexible Ausbildung von Anzeigefläche und Gehäuse als Beispiel einer zumindest teilbiegsamen Möglichkeit durch Verspannen eines z.B. Polymer-Displays in einem Gehäuserahmen an zwei Seiten.

**Fig. 30** zeigt mehrere flexibel ausgebildete erfindungsgemäße digitale Bücher am Beispiel von ein oder zwei Anzeigenteilen mit Bedienmöglichkeit, bei der beispielsweise ein oder mehrere Polymer-Display(s) in zumindest teiltransparentem Kunstoff- oder kunststoffähnlichem Material zur Festigung verklebt sind.

Wie bereits beschrieben, ist der Nebenteil 2 oder sind die Nebenteile 2a, 2b derart ausgebildet, dass er/sie von dem Hauptteil 1 elektrisch und/oder mechanisch trennbar ist/ sind, so dass der Hauptteil 1 für sich allein benutzbar ist. Die zumindest eine Bedienungseinheit 6 enthält als die Bedienungselemente Richtungstasten und Funktionstasten, die für verschiedenartige Funktionen einzeln oder in Kombination zu betätigen sind.

Die Anzeigeeinheit D kann vorteilhafterweise eine Funktion zum Anzeigen des Stromversorgungsstatus, vorzugsweise auf dem Bildschirm des Haupt-Teils 1, aufweisen.

Der Bildschirm 3 oder die Bildschirme 3, 4 der Anzeigeeinheit D ist/sind vorzugsweise flexibel ausgebildet, was auch für das Gehäuse gilt, so dass Die digitale mobile Anzeigevorrichtung wie ein Notizbuch, beispielsweise in einer Innentasche einer Jacke, mitgeführt werden kann. Für den Bildschirm 3 oder die Bildschirme 3, 4 kann vorteilhafter Weise eine regelbare Hintergrundbeleuchtung vorgesehen sein. Die Anzeige auf dem Bildschirm 3 oder den Bildschirmen 3, 4 sowie die Hintergrundbeleuchtung können selbsttätig mit dem Auf- oder Zuklappen des Gehäuses ein- oder ausschaltbar sein.

Das Gehäuse kann mit einer Haltevorrichtung (nicht gezeigt) zum Aufnehmen des Bildschirmstiftes 15 zur Benutzung als Betätigungs-, Beschriftungs-, Skizzier- und/oder Bearbeitungswerkzeug versehen sein.

## Patentansprüche

1. Mobile Anzeigevorrichtung, insbesondere zur Wiedergabe von Text- und Bildinformation, aufweisend:
ein Gehäuse (G) mit einer flächigen Anzeigeeinheit (D) mit mindestens einem flachen Bildschirm (3, 4),
mindestens einen Manipulationsbereich (60h) zur Bedienung durch einen Benutzer, wobei der Manipulationsbereich in der Randzone der Anzeigeeinheit (D) derart ausgebildet ist, dass der Benutzer Bedienvorgänge mit den Fingern einer Hand ausführen kann, und
mindestens ein betätigbares Bedienelement, das innerhalb des Manipulationsbereichs auf einer dem mindestens einen Bildschirm abgewandten Seite angeordnet ist, wobei ein Bedienelement einzeln oder Bedienelemente in Kombination Blätterfunktionen zum Navigieren in einem dargestellten Dokumenteninhalt oder Bereitstellungsfunktionen für Auswahlmenüs auslösen, wobei bestimmte Bedienelemente einzeln oder in Kombination im Grundzustand einer bestimmten ersten Funktionalität zugeordnet sind, unmittelbar nach dem Auslösen einer Bereitstellungsfunktion für ein Auswahlmenü jedoch selbsttätig umprogrammiert werden und in einem Selektionszustand eine Selektionsfunktion innerhalb dieses bereitgestellten Auswahlmenüs auslösen.

2. Mobile Anzeigevorrichtung nach Anspruch 1, wobei der Manipulationsbereich mindestens zwei betätigbare Bedienelemente aufweist, und die Anordnung der betätigbaren Bedienelemente in dem Manipulationsbereich derart ausgestaltet ist, dass die betätigbaren Bedienelemente mit den Fingern einer Hand gleichzeitig betätigbar sind.

3. Mobile Anzeigevorrichtung nach Anspruch 1 oder 2, wobei das mindestens eine betätigbare Bedienelement seitlich und/oder rückseitig angeordnet ist.

4. Mobile Anzeigevorrichtung nach einem der vorangegangenen Ansprüche, wobei das mindestens eine betätigbare Bedienelement aneinanderliegende Kombinationstastenelemente umfasst.

5. Mobile Anzeigevorrichtung nach Anspruch 4, wobei das mindestens eine betätigbare Bedienelement drei aneinanderliegende Kombinationstastenelemente umfasst, die derart angeordnet sind, dass sie durch Zeigefinger, Mittelfinger und Ringfinger einer die Anzeigevorrichtung haltenden Hand bedienbar sind.

6. Mobile Anzeigevorrichtung nach einem der vorangegangenen Ansprüche, wobei das mindestens eine betätigbare Bedienelement Richtungstasten und/oder Funktionstasten umfasst, die für verschiedenartige Funktionen einzeln oder in Kombination zu betätigen sind.

7. Mobile Anzeigevorrichtung nach einem der vorangegangenen Ansprüche, wobei ein betätigbares Bedienelement einzeln oder betätigbare Bedienelemente in Kombination zum Bewegen von Seiten ausgebildet ist.

8. Mobile Anzeigevorrichtung nach einem der vorangegangenen Ansprüche, wobei der Bedienvorgang durch Einwirkungen der Finger des Benutzers auf den Manipulationsbereich (60h) ausführbar ist, ohne dass dazu eine wesentliche Verschiebung der Handwurzel der Hand des Benutzers relativ zum Gehäuse (G) erforderlich ist.

9. Mobile Anzeigevorrichtung nach einem der vorangegangenen Ansprüche, wobei das mindestens eine betätigbare Bedienelement einen Slide-Pad, Track-Ball und/oder eine Mehrfunktionstaste aufweist.

10. Mobile Anzeigevorrichtung nach einem der vorangegangenen Ansprüche, wobei ein Bildschirm (3, 4) mindestens im Manipulationsbereich als druckempfindlicher Touchscreen ausgeführt ist.

11. Mobile Anzeigevorrichtung nach Anspruch 10, wobei der Bildschirm (3, 4) mindestens in seinem Randbereich als druckempfindlicher Touchscreen ausgeführt ist, wobei mindestens ein Bildschirmeckbereich oder ein in der Mitte eines Randabschnittes gelegener Bereich zur Auslösung bestimmter Funktionen betätigbar ist.

12. Mobile Anzeigevorrichtung nach Anspruch 10 oder 11, wobei betätigbare Bedienelemente und/oder die druckempfindlichen Bereiche des einen Bildschirms (3, 4) einzeln oder in Kombination Blätterfunktionen zum Navigieren in einem dargestellten Buchinhalt, Bereitstellungsfunktionen für Auswahlmenüs oder Selektionsfunktionen innerhalb bereitgestellter Auswahlmenüs auslösen.

13. Mobile Anzeigevorrichtung nach Anspruch 12, wobei bestimmte Bedienelemente und/oder druckempfindliche Bereiche des einen Bildschirmes (3, 4) einzeln oder in Kombination im Grundzustand einer bestimmten ersten Funktionalität zugeordnet sind, unmittelbar nach dem Auslösen einer Bereitstellungsfunktion für ein Auswahlmenü jedoch in einem Selektionszustand eine Selektionsfunktion innerhalb dieses bereitgestellten Auswahlmenüs auslösen.

14. Mobile Anzeigevorrichtung nach einem der vorangegangenen Ansprüche, wobei die Auswahlmenüs ausschließlich in einem Randbereich eines der Bildschirme angezeigt werden, ohne einen dargestellten Buchinhalt abzudecken.

15. Mobile Anzeigevorrichtung nach einem der vorangegangenen Ansprüche, wobei das Gehäuse eine zumindest zweiteilig ausgebildete Anzeigeeinheit aufweist.

16. Mobile Anzeigevorrichtung nach Anspruch 15, wobei die zumindest zweiteilige Anzeigeeinheit mindestens zwei Bildschirme aufweist.

17. Mobile Anzeigevorrichtung nach Anspruch 14 oder 15, wobei das Gehäuse einen Hauptteil (1) und zumindest einen Nebenteil (2) aufweist, wobei der Hauptteil und der zumindest eine Nebenteil derart angeordnet sind, dass das Gehäuse buchartig um eine Klappachse (A) auf- und zuklappbar ist und der Hauptteil und der zumindest eine Nebenteil einen Buchrückenteil (BR) bilden.

18. Mobile Anzeigevorrichtung nach Anspruch 17, wobei die Anzeigeeinheit derart angeordnet ist, dass der Hauptteil mit zumindest einem Bildschirm und der zumindest eine Nebenteil mit zumindest einem Bildschirm im aufgeklappten Zustand des Gehäuses dem Benutzer wie Seiten eines Buches zur Ansicht zur Verfügung stehen.

## Claims

1. A mobile display device, in particular for displaying text and/or image information, comprising:
a casing (G) having a sheet-like display unit (D) with at least one flat screen (3, 4),
at least one manipulation region (60h) for use by a user, said manipulation region being designed in the edge zone of the display unit (D) such that the user can execute operations with the fingers of a hand; and
at least one operating element adapted to be actuated, which is arranged inside the manipulation region on a side directed away from the at least one screen, wherein an operating element individually or operating elements in combination trigger leafing-through functions for navigating in a document contents displayed, or providing functions for selection menus, wherein specific operating elements individually or in combination, in the basic mode, are associated with a specific first functionality, but immediately after triggering a providing function for a selection menu are automatically re-programmed and trigger, in a selection mode, a selection function within said selection menu provided.

2. The mobile display device according to claim 1, wherein the manipulation region has provided therein at least two operating elements adapted to be actuated, and the arrangement of the actuable operating elements in the manipulation region is such that the actuable operating elements can be actuated simultaneously with the fingers of a hand.

3. The mobile display device according to claim 1 or 2, wherein the at least one operating element adapted to be actuated is arranged at the side and/or on the rear.

4. The mobile display device according to any one of the preceding claims, wherein the at least one operating element adapted to be actuated comprises combination key elements adjoining on another.

5. The mobile display device according to claim 4, wherein the at least one operating element adapted to be actuated comprises three combination key elements adjoining one another, which are arranged such that they can be operated by index finger, middle finger and ring finger of a hand holding the display device.

6. The mobile display device according to any one of the preceding claims, wherein the at least one operating element adapted to be actuated comprises directional keys and/or function keys which are to be actuated for different functions individually or in combination.

7. The mobile display device according to any one of the preceding claims, wherein an actuable operating element individually or actuable operating elements in combination are configured for moving pages.

8. The mobile display device according to any one of the preceding claims, wherein the process of operation can be carried out by actions of the user's fingers on the manipulation region (60h), without this necessitating substantial shifting of the wrist of the user's hand relative to the casing (G).

9. The mobile display device according to any one of the preceding claims, wherein the at least one operating element adapted to be actuated comprises a slide pad, a track ball and/or a multifunction key.

10. The mobile display device according to any one of the preceding claims, wherein the screen (3, 4) is designed as a pressure-sensitive touchscreen at least in the manipulation region.

11. The mobile display device according to claim 10, wherein the screen (3, 4) is designed at least in its edge portion as a pressure-sensitive touchscreen, wherein at least one screen corner portion or a portion located in the middle of an edge section is adapted to be operated for triggering specific functions.

12. The mobile display device according to claim 10 or 11, wherein operating elements adapted to be actuated and/or the pressure-sensitive areas of the one screen (3, 4) individually or in combination trigger leafing-through functions for navigating in a book contents displayed, providing functions for selection menus, or selection functions within selection menus provided.

13. The mobile display device according to claim 12, wherein specific operating elements and/or pressure sensitive areas of the one screen (3, 4) individually or in combination, in the basic mode, are associated with a specific first functionality, but immediately after triggering a providing function for a selection menu trigger, in a selection mode, a selection function within said selection menu provided.

14. The mobile display device according to any one of the preceding claims, wherein the selection menus are indicated exclusively in an edge portion of one of the screens, without covering a book contents displayed.

15. The mobile display device according to any one of the preceding claims, wherein the casing comprises a display unit at least of a two-part design.

16. The mobile display device according to claim 15, wherein the at least two-part display unit comprises at least two screens.

17. The mobile display device according to claim 14 or 15, wherein the casing comprises a main part (1) and at least one secondary part (2), wherein the main part and the at least one secondary part are arranged such that the casing can be folded open and shut about a folding axis (A) like a book, and the main part and the at least one secondary part form a spine part (BR).

18. The mobile display device according to claim 17, wherein the display unit is arranged such that the main part with at least one screen and the at least one secondary part with at least one screen in the folded-open state of the casing are available to the user like pages of a book for viewing.

## Revendications

1. Dispositif d'affichage mobile, en particulier pour reproduire des informations sous forme de texte et d'image, comportant :
- un boîtier (G) avec une unité d'affichage plate (D) présentant au moins un écran plat (3, 4),
- au moins une zone de manipulation (60h) destinée à la commande par un utilisateur, ladite zone de manipulation étant formée dans la zone du bord de l'unité d'affichage (D) de telle sorte que l'utilisateur puisse exécuter des opérations de commande avec les doigts d'une main, et
- au moins un élément de commande apte à être actionné, qui est disposé à l'intérieur de la zone de manipulation, sur un côté opposé audit écran, étant précisé qu'un élément de commande individuel ou des éléments de commande combinés déclenchent des fonctions de défilement en vue de naviguer dans un contenu de document représenté, ou des fonctions de présentation pour des menus de sélection, et que des éléments de commande définis, individuels ou combinés, sont affectés à l'état de base à une première fonctionnalité définie, mais sont automatiquement reprogrammés juste après le déclenchement d'une fonction de présentation pour un menu de sélection, et déclenchent dans un état de sélection une fonction de sélection à l'intérieur de ce menu de sélection présenté.

2. Dispositif d'affichage mobile selon la revendication 1, dans lequel la zone de manipulation comporte au moins deux éléments de commande aptes à être activés, et la disposition des éléments de commande aptes à être activés, dans la zone de manipulation, est conçue pour que ces éléments de commande puissent être activés en même temps avec les doigts d'une main.

3. Dispositif d'affichage mobile selon la revendication 1 ou 2, dans lequel le ou les éléments de commande aptes à être activés sont disposés sur le côté et/ou à l'arrière.

4. Dispositif d'affichage mobile selon l'une des revendications précédentes, dans lequel le ou les éléments de commande aptes à être activés comprennent des éléments à touche combinés.

5. Dispositif d'affichage mobile selon la revendication 4, dans lequel le ou les éléments de commande aptes à être actionnés comprennent trois éléments à touche combinés juxtaposés qui sont disposés de telle sorte qu'ils peuvent être actionnés à l'aide de l'index, du majeur et de l'annulaire d'une main qui tient le dispositif d'affichage.

6. Dispositif d'affichage mobile selon l'une des revendications précédentes, dans lequel le ou les éléments de commande aptes à être actionnés comprennent des touches d'orientation et/ou des touches de fonction qui peuvent être actionnées pour différentes fonctions, individuellement ou combinées.

7. Dispositif d'affichage mobile selon l'une des revendications précédentes, dans lequel un élément de commande apte à être actionné est conçu individuellement ou des éléments de commande aptes à être actionnés sont conçus de manière combinée pour déplacer des pages.

8. Dispositif d'affichage mobile selon l'une des revendications précédentes, dans lequel l'opération de commande peut être réalisée grâce à l'action des doigts de l'utilisateur sur la zone de manipulation (60h) sans nécessiter de déplacement notable de la base de la main de l'utilisateur par rapport au boîtier (G).

9. Dispositif d'affichage mobile selon l'une des revendications précédentes, dans lequel le ou les éléments de commande aptes à être actionnés comportent un pavé de commande à glissement, une boule de commande et/ou une touche multifonction.

10. Dispositif d'affichage mobile selon l'une des revendications précédentes, dans lequel un écran (3, 4) est conçu au moins dans la zone de manipulation comme un écran tactile sensible à la pression.

11. Dispositif d'affichage mobile selon la revendication 10, dans lequel l'écran (3, 4) est conçu au moins dans la zone de son bord comme un écran tactile sensible à la pression, au moins une zone d'angle de l'écran ou une zone située au milieu d'un bord étant apte à être actionnée pour déclencher des fonctions définies.

12. Dispositif d'affichage mobile selon la revendication 10 ou 11, dans lequel des éléments aptes à être commandés et/ou les zones de l'un des écrans (3, 4) sensibles à la pression déclenchent, individuellement ou combinés, des fonctions de défilement en vue de naviguer dans un contenu de livre représenté, des fonctions de présentation pour des menus de sélection, ou des fonctions de sélection à l'intérieur de menus de sélection présentés.

13. Dispositif d'affichage mobile selon la revendication 12, dans lequel des éléments de commande définis et/ou des zones de l'un des écrans (3, 4) sensibles à la pression, individuellement ou combinés, sont affectés à l'état de base à une première fonctionnalité définie, mais déclenchent automatiquement dans un état de sélection, juste après le déclenchement d'une fonction de présentation pour un menu de sélection, une fonction de sélection à l'intérieur de ce menu de sélection présenté.

14. Dispositif d'affichage mobile selon l'une des revendications précédentes, dans lequel les menus de sélection s'affichent uniquement dans une zone du bord de l'un des écrans, sans couvrir un contenu de livre représenté.

15. Dispositif d'affichage mobile selon l'une des revendications précédentes, dans lequel le boîtier comporte une unité d'affichage formée d'au moins deux parties.

16. Dispositif d'affichage mobile selon la revendication 15, dans lequel l'unité d'affichage au moins en deux partie comporte au moins deux écrans.

17. Dispositif d'affichage mobile selon la revendication 14 ou 15, dans lequel le boîtier comporte une partie principale (1) et au moins une partie secondaire (2), la partie principale et la ou les parties secondaires étant disposées de telle sorte que le boîtier peut être ouvert et fermé à la manière d'un livre en pivotant sur un axe de pivotement (A) et que ces deux parties forment un dos de livre (BR).

18. Dispositif d'affichage mobile selon la revendication 17, dans lequel l'unité d'affichage est disposée de telle sorte que la partie principale avec au moins un écran et la ou les parties secondaires avec au moins un écran, dans la position ouverte du boîtier, se présentent à la vue de l'utilisateur comme les pages d'un livre.
